# EUROPÄISCHE PATENTSCHRIFT

(11) **EP 1 108 193 B1**
(45) Veröffentlichungstag und Bekanntmachung des Hinweises auf die Patenterteilung: **06.03.2002**
(21) Anmeldenummer: 99932839.6
(22) Anmeldetag: 06.07.1999
(51) Int. Cl.: F28D 20/02, C09K 5/06

(54) **LATENTWÄRMEKÖRPER MIT PORENSTRUKTUR UND VERFAHREN ZU DESSEN HERSTELLUNG**
LATENT HEAT BODY WITH PORE STRUCTURE AND METHOD FOR THE PRODUCTION THEREOF
CORPS A CHALEUR LATENTE PRESENTANT UNE STRUCTURE POREUSE, ET SON PROCEDE DE PRODUCTION

(30) Priorität: 20.08.1998 DE 19837730; 18.12.1998 DE 19858794
(43) Veröffentlichungstag der Anmeldung: 20.06.2001
(73) Patentinhaber: Schümann Sasol GmbH, 20457 Hamburg (DE)
(72) Erfinder: FIEBACK, Klaus, D-10245 Berlin (DE); BÜTTNER, Dirk, Carsten, D-12247 Berlin (DE); KUTZKER, Lutz, D-15517 Fürstenwalde (DE); LAUBE, Andreas, D-15517 Fürstenwalde (DE)
(74) Vertreter: Müller, Enno, Dipl.-Ing.
(86) Internationale Anmeldenummer: EP9904730
(87) Internationale Veröffentlichungsnummer: WO0011424

(56) Entgegenhaltungen:
- DE-A- 1 940 269
- DE-A- 3 639 415
- DE-A- 4 307 065
- DE-A- 19 630 073
- DE-U- 8 408 966
- US-A- 4 259 401
- US-A- 4 988 543
- US-A- 5 053 446

## Beschreibung

Die Erfindung betrifft einen Latentwärmekörper mit in einem Aufnahmeräume aufweisenden Trägermaterial aufgenommenen Latentwärmespeichermaterial auf Paraffinbasis.

Aus dem deutschen Gebrauchsmuster 84 08 966 ist ein poriges Schaumstoffmaterial als Trägermaterial bekannt. Bei diesem Schaumstoffmaterial ist jedoch keine auch im erwärmten Zustand des Latentwärmespeichermaterials gewünschte Strukturfestigkeit zu erreichen. Überdies ist das porige Schaumstoffmaterial nicht ohne weiteres mit dem Latentwärmespeichermaterial zu tränken, sondern es müssen besondere Maßnahmen, wie Quetschen, ergriffen werden.

Aus der nicht vorveröffentlichten EP-A-983 474 ist ebenfalls ein Latentwärmekörper bekannt, bei dem weiterhin das Trägermaterial aus einzelnen Trägermaterialelementen bspw. durch Verklebung zusammengesetzt ist, wobei jedenfalls zwischen den Trägermaterialelementen kapillarartige Aufnahmeräume für das Latentwärmespeichermaterial ausgebildet sind.

Ausgehend von dem vorgenannten deutschen Gebrauchsmuster 84 08 966 liegt der Erfindung die Aufgabe zugrunde, einen Latentwärmekörper anzugeben, der bei einfacher Herstellbarkeit hoch wirksam ist, d.h. ein hohes Wärmespeichervermögen aufweist, und der zugleich auch im erwärmten Zustand eine ausreichende Strukturfestigkeit aufweist und insbesondere erhöhten statischen Anforderungen genügt. Weiter ist angestrebt, daß sich das Trägermaterial möglichst selbsttätig mit dem Latentwärmespeichermaterial füllt bzw. dieses aufsaugt und für Latentwärmespeichermaterial ein hohes Rückhaltevermögen aufweist.

Dieses Aufgabe ist zunächst beim Gegenstand des Anspruches 1 gelöst, wobei darauf abgestellt ist, daß innerhalb des Trägermaterials kapillare Aufnahmeräume für das Latentwärmespeichermaterial ausgebildet sind und daß das Trägermaterial einen Mineralstoff mit einer offenen kapillaren Porenstruktur enthält. Bei einem derartigen Mineralstoff ist an eine saugfähige Feststoffstruktur gedacht, vorzugsweise aus einem Gipswerkstoff, oder aus einem Tonwerkstoff, oder aus Kalksandstein, oder aus Kieselerde (Dolorminerden) oder auch aus beliebigen Kombinationen dieser Materialien. Bevorzugte Ausgangsprodukte sind unbehandelte Gipsplatten, Gipsgranulate, Kieselerdegranulate (Dolorminerden). Neben der universellen Verfügbarkeit und den geringen Rohproduktpreisen erfüllen diese Produkte erhöhte statische Anforderungen, Brandschutzanforderungen und haben eine vergleichsweise hohe Wärmeleitfähigkeit. Latentwärmekörper mit derartigen Feststoffstrukturen haben im Vergleich zu Latentwärmekörpern mit einem aus Fasern bestehenden Trägermaterial in der Regel einen geringeren, jedoch für zahlreiche Anwendungen ausreichenden Masseanteil an Latentwärmespeichermaterial, wobei als Latentwärmespeichermaterial vorzugsweise Paraffin, aber auch Stearin, Fett oder ähnliche Stoffe verwendet werden können. Gegenüber Latentwärmekörpern mit höherem Masseanteil an Latentwärmespeichermaterial ergibt sich daraus für den erfindungsgemäßen Latentwärmekörper besonders vor dem Hintergrund der geringen Rohproduktpreise des Trägermaterials ein Kostenvorteil. Gleichwohl besteht auch bei einem erfindungsgemäßen Latentwärmekörper die Möglichkeit, daß das Trägermaterial zusätzlich zu einem Mineralstoff auch Faserelemente enthält, die bevorzugt verteilt in dem Trägermaterial angeordnet sind. Die Faserelemente können grundsätzlich aus organischen und/oder organischen Materialien bestehen und insbesondere aus den in der EP-A-983 474 genannten Materialien ausgewählt sein. Exemplarisch wird in diesem Zusammenhang auf organische Materialien wie Kunststoff, Zellulose, bzw. Holz, Keramik, Mineralwolle, Kunststoff, Baum- oder Schafwolle genannt. Faserelemente aus Kunststoff weisen vorzugsweise Basismaterialien wie Polyester, Polyamid, Polyurethan, Polyalcrylnitryl oder Polyolephine auf. Allgemein können Faserelemente auch aus verschiedenen Materialien mit einer sehr unterschiedlichen Länge und einem sehr unterschiedlichen Durchmesser in beliebigen Kombinationen verwendet werden. Ein Trägermaterial, das ergänzend zu einem Mineralstoff mit einer offenen kapillaren Porenstruktur d.h. saugfähigen Feststoffstruktur, zusätzlich Faserelemente enthält, kann je nach gewählten Massenanteilen für einen jeweiligen Anwendungsfall optimierte Eigenschaften aufweisen. So bewirkt eine Zugabe von Faserstrukturen in der Regel eine erhöhte Speicherkapazität für Latentwärmespeichermaterial und eine Verringerung der Wärmeleitfähigkeit. Letztere führt gleichzeitig zu einer Erhöhung der Ausspeicherzeit, d.h. zu einer Verlangsamung der Wärmeübertragung, die in vielen Anwendungen Vorteile bietet. Weiterhin können sich der Mineralstoff mit der offenen kapillaren Porenstruktur und die Faserelemente noch in weiteren Stoffeigenschaften oder Merkmalen, wie bspw. der Dichte, der Wärmespeicherkapazität, der Farbgebung und dergleichen, unterscheiden, so daß durch geeignete Wahl von entsprechenden Mengenanteilen eine gezielte Abstimmung des Trägermaterials auf den jeweiligen Anwendungszweck möglich ist. Insgesamt wird deutlich, daß eine derartige Kombination die Anwendungsbreite von Trägermaterial beträchtlich erhöht.

Besonders ist bevorzugt, daß das Latentwärmespeichermaterial ein Paraffin ist oder auf Basis eines solchen Paraffins aufgebaut ist, wie es in der DE-OS 43 07 065 beschrieben ist. In einer bevorzugten Ausführung beträgt der Massenanteil des Latentwärmespeichermaterials, bezogen auf die Gesamtmasse des Latentwärmekörpers, zwischen 5 und 50%, vorzugsweise 25% oder weiter vorzugsweise 40 bis 50%. Die offenen kapillaren Porenstrukturen, die aufgrund ihrer kapillaren Saugwirkung auch als "Saugstrukturen" bezeichnet werden, sind in einer vorteilhaften Ausführungsform so ausgebildet, daß darin ein vorzugsweise gleichmäßig verteiltes Restluftvolumen verbleibt, das temperaturabhängige Volumenänderungen des Latentwärmespeichermaterials von bevorzugt maximal 10% des Latentwärmespeichermaterialvolumens aufnimmt. Temperaturausdehnungen der genannten Größenordnung sind üblichen maximalen Überhitzungen gegenüber der Schmelztemperatur des Latentwärmespeichermaterials von 30 bis 40°K zugeordnet, so daß es aufgrund der Aufnahme bzw. des Ausgleichs dieser temperaturabhängigen Volumenänderungen durch die Restluftvolumina unter diesen Bedingungen nicht zum Ausschwitzen des Latentwärmespeichermaterials aus dem Trägermaterial kommt. Gleichwohl kann der erfindungsgemäße Latentwärmekörper durch ein Latentwärmespeichermaterial mit darin enthaltenen Additiven, wie vorzugsweise Verdickungsmitteln und/oder einem Anteil an Mineralölen und Polymeren und/oder weiteren der in der EP-A-983 474 und/oder der DE-OS 43 07 065 genannten Zusatzstoffen in der Weise an spezielle Anwendungsfälle angepaßt sein, daß auch bei höheren als den vorgenannten Überschreitungen der Schmelz- bzw. Phasenumwandlungstemperatur kein Ausschwitzen des Latentwärmespeichermaterials aus dem Trägermaterial möglich ist. Alternativ oder kombinativ kann der Latentwärmekörper eine Umhüllung aufweisen, die vorzugsweise aus einem Folienmaterial, wie bspw. Kunststoff- oder Aluminiumfolie besteht. Dabei ist insbesondere an eine für Latentwärmespeichermaterial undurchlässige Umhüllung gedacht. Für bestimmte Anwendungen kann jedoch auch vorteilhaft sein, die Umhüllung gezielt durchlässig für Latentwärmespeichermaterial auszubilden, bspw. durch Einbringen kleiner Poren in ein für Latentwärmespeichermaterial undurchlässiges Folienmaterial, so daß eine gewollte "Atmungsaktivität" der Umhüllung gegeben ist. Eine derartige Atmungsaktivität kann z.B. dann von Vorteil sein, wenn der Latentwärmekörper zusätzlich ein hygroskopisches Material enthält, da dann die Möglichkeit zu einem Entzug der an dem hygroskopischen Material angebundenen Feuchtigkeit aus der Umgebung des Latentwärmekörpers besteht. In diesem Zusammenhang wird auch auf die DE-A-198 36 048 hingewiesen.

Zunächst ist daran gedacht, daß das Trägermaterial in einem Latentwärmekörper als eine zusammenhängende Struktur ausgebildet ist, d.h., daß aus dem Mineralstoff mit der offenen kapillaren Porenstruktur und den ggf. darin zusätzlich enthaltenen Faserelementen ein zusammenhängender Körper mit darin enthaltenen kapillaren Aufnahmeräumen für das Latentwärmespeichermaterial ausgebildet ist. Ein aus einem Mineralstoff mit einer offenen kapillaren Porenstruktur und aus Faserelementen gebildetes Trägermaterial kann durch die kapillare Porenstruktur allein bedingte kapillare Aufnahmeräume und/oder durch aneinandergrenzende Faserelemente gebildete kapillare Aufnahmeräume und/oder durch Mineralstoff in Verbindung mit Faserelementen gebildete kapillare Aufnahmeräume enthalten. Unter einer offenen kapillaren Porenstruktur wird dabei im Sinne der Erfindung eine Porenstruktur verstanden, die im Hinblick auf ihre Offenheit Verbindungen zwischen den einzelnen Poren und zwischen den in Oberflächen- bzw. Randnähe liegenden Poren und der Umgebung aufweist und die im Hinblick auf ihre Kapillarität eine selbstansaugende Wirkung auf Latentwärmespeichermaterial ausübt. Erfindungsgemäß wird eine offene kapillare Porenstruktur auch bei einem Trägermaterial erhalten, das zusätzlich zu einem Mineralstoff auch Faserelemente beinhaltet. Die Poren bzw. kapillaren Aufnahmeräume können insbesondere kanalartig, auch mit veränderlichem Kanalquerschnitt, ausgebildet sein und/oder auch kugelartige oder ähnliche Hohlräume enthalten. Ebenso sind jedoch zusätzliche weitere Formen denkbar.

Alternativ zu einer zusammenhängenden Struktur des Trägermaterials ist bei einer alternativen Ausführungsform des Latentwärmekörpers vorgesehen, daß dieser eine Anzahl von Latentwärmeteilkörpern enthält, wobei ein Latentwärmeteilkörper einen Trägermaterialteilkörper und das in den darin enthaltenen kapillaren Aufnahmeräumen aufgenommene Latentwärmespeichermaterial und das ebenfalls in den kapillaren Aufnahmeräumen vorhandene Restluftvolumen enthält. Der erfindungsgemäße Latentwärmekörper bzw. die saugfähigen Feststoffstrukturen können bspw. in Form von Platten, Bausteinen, Granulaten oder weiteren Formgebungen für vielfältige Aufgaben eingesetzt werden. So besteht z.B. die Möglichkeit, Platten oder Bausteine eigenständig oder im Konstruktionsverbund (Wände) einzusetzen. Weitere mögliche Anwendungsfälle sind eine Warmhalteplatte für Nahrungsmittel, der Einsatz in Verbindung mit einer Fußbodenheizung und ein Transportbehälter, auf welche in Verbindung mit der Figurenbeschreibung noch näher eingegangen wird.

Gegenstand der Erfindung ist weiterhin ein Verfahren zur Herstellung eines Latentwärmekörpers mit in einem kapillare Aufnahmeräume aufweisenden Trägermaterial aufgenommenen Latentwärmespeichermaterial auf Paraffinbasis. Gattungsgemäße Verfahren sind aus der nicht vorveröffentlichten EP-A-983 474 und aus der ebenfalls nicht vorveröffentlichten DE-A-198 36 048 bekannt. Der Erfindung liegt dabei die Aufgabe zugrunde, ein Verfahren anzugeben, mit dem der vorgenannte Latentwärmekörper auf einfache und preiswerte Weise hergestellt werden kann. Erfindungsgemäß ist zur Lösung der Aufgabe darauf abgestellt, daß das Latentwärmespeichermaterial verflüssigt wird, daß das vorher verflüssigte Latentwärmespeichermaterial an selbstansaugende, kapillarartige Aufnahmeräume des Trägermaterials herangeführt wird und daß ein Trägermaterial verwendet wird, das einen Mineralstoff mit einer offenen kapillaren Porenstruktur enthält. Das Trägermaterial bzw. der Mineralstoff sowie das Latentwärmespeichermaterial können dabei bevorzugt eines oder mehrere der jeweils oben beschriebenen Merkmale aufweisen. Insbesondere besteht die Möglichkeit, daß dem Mineralstoff Faserelemente zugegeben werden, die ebenfalls eines oder mehrere der hierzu oben erläuterten Merkmale aufweisen können. Bevorzugt ist, daß die Faserelemente in dem Mineralstoff gleichmäßig verteilt werden. Beispielsweise besteht dazu die Möglichkeit, ausgehend von einem Rohzustand des Mineralstoffes, in dem dieser in rieselfähiger, flüssiger oder breiiger Form vorliegt, Faserelemente in den Mineralstoff einzurühren, bis diese bevorzugt eine gleichmäßige Verteilung eingenommen haben und in weiteren Verfahrensschritten ggf. zunächst eine Verflüssigung und anschließend durch eine thermische Behandlung (Brennen) eine gewünschte saugfähige Feststoffstruktur, d.h. eine offene kapillare Porenstruktur, herzustellen.

Die Verflüssigung des Latentwärmespeichermaterials kann auf einfache Weise durch Zufuhr von Wärmeenergie erfolgen, bis der gewünschte Verflüssigungsgrad bis hin zu einer möglichen vollständigen Verflüssigung des Latentwärmespeichermaterials erreicht worden ist. Wird dann das vorher verflüssigte Latentwärmespeichermaterial in einem weiteren Verfahrensschritt an die selbstansaugenden, kapillarartigen Aufnahmeräume des Trägermaterials herangeführt, so ist aufgrund der kapillaren Saugwirkung der offenen, kapillaren Porenstruktur des Trägermaterials eine selbständig einsetzende und fortdauernde Aufnahme des Latentwärmespeichermaterials in den kapillarartigen Aufnahmeräumen des Trägermaterials zu beobachten. Ein wesentlicher Vorteil des erfindungsgemäßen Verfahrens ist somit, daß auf ein mechanisches Einwirken auf das Trägermaterial und das Latentwärmespeichermaterial zu diesem Zweck vollständig verzichtet werden kann. Vielmehr wird ein Aufnahme des vorher verflüssigten Latentwärmespeichermaterials in dem Trägermaterial auch dann erreicht, wenn das vorher verflüssigte Latentwärmespeichermaterial drucklos an die selbstansaugenden, kapillarartigen Aufnahmeräume des Trägermaterials herangeführt wird. In einer bevorzugten Variante des erfindungsgemäßen Verfahrens wird das Latentwärmespeichermaterial in einen Behälter eingegeben und darin durch Wärmezufuhr bis zu einem gewünschten Ausmaß verflüssigt, worauf das Trägermaterial in das vorher verflüssigte Latentwärmespeichermaterial eingetaucht wird. Durch das Eintauchen wird das vorher verflüssigte Latentwärmespeichermaterial an die selbstansaugenden kapillaren Aufnahmeräume des Trägermaterials herangeführt, so daß es durch die kapillare Saugwirkung selbsttätig in diese aufgenommen wird. In einer weiter bevorzugten Weiterbildung des Verfahrens wird die Temperatur des Latentwärmespeichermaterials während des Heranführens an die selbstansaugenden kapillarartigen Aufnahmeräumen des Trägermaterials durch gezielte Wärmezu- und/oder -abfuhr gesteuert. Beispielsweise besteht die Möglichkeit, bei einem Eintauchen des Trägermaterials in das vorher verflüssigte Latentwärmespeichermaterial durch eine gezielte Wärmezufuhr eine weitere Verflüssigung bzw. eine weitere Absenkung der Viskosität des Latentwärmespeichermaterials zu erreichen und damit die Aufnahme in die kapillarartigen Aufnahmeräume zu begünstigen. Andererseits besteht auch die Möglichkeit, während des Eintauchens durch eine Wärmeabfuhr bzw. durch ein Kühlen des Latentwärmespeichermaterials einen gegenteiligen Effekt zu erzielen, wodurch z.B. nach einer zweckmäßig gewählten zeitlichen Dauer des Eintauchvorganges eine Verlangsamung oder sogar im Bedarfsfall eine Beendigung der Aufnahme von weiterem Latentwärmespeichermaterial realisiert werden kann. Weiterhin besteht die Möglichkeit, daß dem Latentwärmespeichermaterial Additive zugegeben werden, die dessen Fließverhalten und/oder die bei einer Abkühlung erzielte Kristallstruktur vorteilhaft beeinflussen. Beispielsweise kann dem Latentwärmespeichermaterial ein Verdickungsmittel und/oder ein Anteil aus Mineralölen und Polymeren zugegeben werden. Weiterhin können auch Additive verwendet werden wie diese in der DE-OS43 07 065 und/oder in der EP-A-983 474 beschrieben sind. Vorzugsweise wird mit dem erfindungsgemäßen Verfahren eine solche Masse bzw. Menge des Latentwärmespeichermaterials zur Aufnahme an die Aufnahmeräume des Trägermaterials herangeführt, die zwischen 5 und 50%, vorzugsweise 25% und weiter vorzugsweise 40 bis 50% der Gesamtmasse des Latentwärmekörpers beträgt. Ist bspw. für ein gewähltes Latentwärmespeichermaterial in einem bestimmten Verflüssigungszustand die spezifische Aufnahmemenge in einem Trägermaterial pro Zeiteinheit bekannt, kann eine gezielte Beeinflussung der in die Aufnahmeräume des Trägermaterials aufgenommenen Masse an Latentwärmespeichermaterial durch eine geeignete Wahl der Aufnahmezeitdauer erfolgen. Nach Ablauf dieser Zeitdauer besteht dann die Möglichkeit, den Aufnahmevorgang durch eine Trennung des noch außerhalb des Trägermaterials verbliebenen Latentwärmespeichermaterial von dem Trägermaterial, bspw. durch ein Herausnehmen des Trägermaterials aus einem Tauchbad des vorher verflüssigten Latentwärmespeichermaterials, zu beenden. In diesem Zusammenhang ist weiter bevorzugt, daß der Latentwärmekörper bzw. das Trägermaterial nach der Entnahme aus einem Tauchbad zunächst abgetropft wird und anschließend in einem weiteren möglichen Verfahrensschritt bis auf eine gewünschte Temperatur, bspw. auf Umgebungstemperatur, abgekühlt wird. Bezüglich des zuvorbeschriebenen Tauchverfahrens wird ergänzend angemerkt, daß ein Heranführen des vorher verflüssigten Latentwärmespeichermaterials an das Trägermaterial auch auf andere zweckmäßige Weise erfolgen kann, bspw. durch ein Beträufeln des Trägermaterials mit Latentwärmespeichermaterial oder durch Auftrag einer zur Aufnahme vorgesehenen, ggf. definierten, Schichtdicke von Latentwärmespeichermaterial auf das Trägermaterial. In einem weiteren Verfahrensschritt besteht die Möglichkeit, daß der Latentwärmekörper mit einer Umhüllung versehen wird, die eines oder mehrere der dazu oben beschriebenen Merkmale aufweisen kann.

Für die erfindungsgemäßen Latentwärmekörper bieten sich aufgrund der oben erläuterten vorteilhaften Eigenschaften und deren Variationsmöglichkeiten zahlreiche Verwendungsmöglichkeiten. Sie werden bspw. in Form von Platten, Bausteinen oder Granulaten eigenständig oder in einem Konstruktionsverbund (Wände) eingesetzt. Weitere mögliche Verwendungen im Bauwesen sind Speicherwände, Dächer oder auch Fußbodenspeicherheizungen. Als vorteilhafter Effekt wird dabei erreicht, daß aus im Hinblick auf das Wärmespeicherverhalten "leichten" Baustoffen durch das Tränken bzw. durch die Aufnahme von Latentwärmespeichermaterial, "schwere" Baustoffe erhalten werden, ohne deren Schichtdicke zu verändern. Darüber hinaus sind, wie sich auch aus der nachfolgenden Beschreibung bevorzugter Ausführungsbeispiele ergibt, zahlreiche weitere Verwendungen des erfindungsgemäßen Latentwärmekörpers denkbar.

Die Erfindung betrifft insofern weiterhin eine Warmhalteplatte mit einem Plattengrundkörper und mit einer ausgebildeten Aufnahme für Nahrungsmittel, insbesondere für Reis. Erfindungsgemäß ist darauf abgestellt, daß der Plattengrundkörper einen Latentwärmekörper mit in einem Aufnahmeräume aufweisenden Trägermaterial aufgenommenen Latentwärmespeichermaterial auf Paraffinbasis enthält, wobei innerhalb des Trägermaterials kapillare Aufnahmeräume für das Latentwärmespeichermaterial ausgebildet sind und das Trägermaterial einen Mineralstoff mit einer offenen kapillaren Porenstruktur enthält.

Weiterhin besteht die Möglichkeit, daß der Latentwärmekörper der Warmhalteplatte eines oder mehrere der dazu oben erläuterten Merkmale aufweist. In einer bevorzugten Ausgestaltung ist vorgesehen, daß eine oder mehrere Aufnahmen für Nahrungsmittel jeweils eine in eine Oberfläche des Plattengrundkörpers integrierte Ausnehmung aufweisen. Der Vorteil der erfindungsgemäßen Warmhalteplatte besteht in einem preiswerten und einfachen, dabei stabilen Aufbau und in einer hoch wirksamen Wärmespeicherwirkung.

Die Erfindung betrifft weiterhin eine Fußbodenheizung, insbesondere eine Elektrofußbodenheizung, mit einem zwischen einer Rohdecke und einer Abdeckung angeordneten Heizregister, wobei erfindungsgemäß ein Latentwärmekörper vorgesehen ist mit in einem Aufnahmeräume aufweisenden Trägermaterial aufgenommenen Latentwärmespeichermaterial auf Paraffinbasis, wobei innerhalb des Trägermaterials kapillare Aufnahmeräume für das Latentwärmespeichermaterial ausgebildet sind und das Trägermaterial einen Mineralstoff mit einer offenen kapillaren Porenstruktur enthält. Der Latentwärmekörper kann darüber hinaus eines oder mehrere der oben beschriebenen Merkmale aufweisen. Insbesondere besteht die Möglichkeit, daß der Latentwärmekörper plattenartig ausgebildet ist und zwischen der Rohdecke und dem Heizregister angeordnet ist. In einer bevorzugten Ausführungsform ist auf der Oberseite der Rohdecke eine Wärmeisolationsschicht angeordnet, bei der es sich beispielsweise um eine Styroporschicht handeln kann. Weiter ist bevorzugt, daß zwischen der Rohdecke und dem Heizregister eine erste Lage mit einem aus Latentwärmeteilkörpern gebildeten Latentwärmekörper angeordnet ist, der ebenfalls eines oder mehrere der in Verbindung mit dem erfindungsgemäßen Latentwärmekörper erläuterten Merkmale aufweisen kann. Insbesondere besteht die Möglichkeit, daß die zuvor beschriebene erste Lage zwischen dem plattenförmigen Latentwärmekörper und dem Heizregister angeordnet ist. In einer zweckmäßigen Weiterbildung der Fußbodenheizung ist zwischen dem Heizregister und der Abdeckung eine zweite Lage mit einem aus Latentwärmeteilkörpern gebildeten Latentwärmekörper vorgesehen, der ebenfalls eines oder mehrere Merkmale, wie diese in Verbindung mit dem erfindungsgemäßen Latentwärmekörper beschrieben sind, aufweisen kann. Insbesondere ist daran gedacht, daß die Latentwärmeteilkörper der ersten und/oder zweiten Lage granulatartig ausgebildet sind. Weiterhin besteht die Möglichkeit, daß in den Latentwärmeteilkörpern der ersten Lage ein Latentwärmespeichermaterial mit einer gegenüber dem in den Latentwärmeteilkörpern der zweiten Lage enthaltenen Latentwärmespeichermaterial anderen Phasenumwandlungstemperatur aufgenommen ist. Insbesondere ist daran gedacht, daß die Phasenumwandlungstemperatur des Latentwärmespeichermaterials der ersten Lage höher ist als die Phasenumwandlungstemperatur des Latentwärmespeichermaterials der zweiten Lage. Zu den vorteilhaften Eigenschaften der erfindungsgemäßen Fußbodenheizung zählt ihre hohe Wärmespeicherkapazität und die damit verbundene gleichmäßige Wärmeabgabe an den darüber befindlichen Raum. Weiterhin erfüllt die Fußbodenheizung aufgrund der strukturellen Beschaffenheit der darin enthaltenen Latentwärmekörper erhöhte statische Anforderungen.

Die Erfindung betrifft weiterhin einen Transportbehälter mit einem Außengehäuse und einem darin mit einem Zwischenraum beabstandet aufgenommenen Innengehäuse. Erfindungsgemäß ist darauf abgestellt, daß in dem Zwischenraum ein Latentwärmekörper angeordnet ist mit in einem Aufnahmeräume aufweisenden Trägermaterial aufgenommenen Latentwärmespeichermaterial auf Paraffinbasis, wobei innerhalb des Trägermaterials kapillare Aufnahmeräume für das Latentwärmespeichermaterial ausgebildet sind und das Trägermaterial einen Mineralstoff mit einer offenen kapillaren Porenstruktur enthält. Der Latentwärmekörper kann dabei weiterhin eines oder mehrere der dazu oben erläuterten Merkmale aufweisen. In einer zweckmäßigen Weiterbildung sind in dem Zwischenraum plattenartige Latentwärmekörper bevorzugt lösbar bzw. entnehmbar aufgenommen, wobei in der zu der Plattenebene der plattenartigen Latentwärmekörper senkrechten Richtung benachbart zumindest zwei Latentwärmekörper mit verschiedenen Phasenumwandlungstemperaturen des darin jeweils aufgenommenen Latentwärmespeichermaterials angeordnet sind.

Die Erfindung betrifft weiterhin auch einen Latentwärmekörper nach dem Oberbegriff von Anspruch 41. Danach handelt es sich um einen Latentwärmekörper mit einem Trägermaterial und darin in kapillaren Aufnahmeräumen aufgenommenem Latentwärmespeichermaterial aus Paraffinbasis, wobei der Latentwärmekörper eine Anzahl von Latentwärmeteilkörpern enthält und ein Latentwärmeteilkörper einen Trägermaterialteilkörper und darin in kapillaren Aufnahmeräumen aufgenommenes Latentwärmespeichermaterial enthält. Ein derartiger Latentwärmekörper ist aus der WO 98/53264 bekannt. Sofern darin vorgesehen ist, daß ein Latentwärmekörper eine Anzahl von Latentwärmeteilkörpern aufweist, stoßen die Latentwärmeteilkörper mit ihren Außenflächen mehr oder minder lose aneinander, wobei es auch zum Einschluß von Luftvolumina zwischen den Latentwärmeteilkörpern kommen kann. Davon ausgehend liegt dem weiteren Gegenstand der Erfindung die Aufgabe zugrunde, einen gattungsgemäßen Latentwärmekörper in gebrauchsvorteilhafter Weise fortzubilden.

Diese technische Problematik ist zunächst und im wesentlichen durch die kennzeichnenden Merkmale von Anspruch 41 gelöst, wobei darauf abgestellt wird, daß die Anzahl der Latentwärmeteilkörper gemeinsam von einer Einbettungsmasse umgeben ist und daß das Trägermaterial Holzfasern und/oder Pappe und/oder Kieselerdegranulat und/oder Diatomeenerde enthält. Auch weitere, für die Erfindung geeignete kapillare Aufnahmeräume aufweisende Materialien können entsprechend verwendet werden, so daß das Latentwärmespeichermaterial in jedem Fall gut durch die kapillare Saugwirkung der Aufnahmeräume in dem Trägermaterial aufgenommen wird. Bevorzugt ist weiter, daß in den kapillaren Aufnahmeräumen ein temperaturabhängige Volumenänderungen des Latentwärmespeichermaterials von bis zu etwa 10% des Latentwärmespeichermaterialvolumens aufnehmendes Restluftvolumen vorhanden ist. Wie auch bereits mit Bezug auf den ersten Erfindungsgegenstand der vorliegenden Anmeldung beschrieben, kann das Trägermaterial außerdem Faserelemente, vorzugsweise einer gleichmäßigen Verteilung, enthalten. Es besteht auch die Möglichkeit, daß das Latentwärmespeichermaterial ein Verdickungsmittel und/oder einen Anteil an Mineralölen und Polymeren enthält.

Ebenso kann auch bei einem Latentwärmekörper, wie dieser in Verbindung mit den Ansprüchen 1 bis 15 beschrieben ist, das Trägermaterial mit dem darin in den kapillaren Aufnahmeräumen aufgenommenem Latentwärmespeichermaterial bezüglich seiner Außenkonturen von einer Einbettungsmasse umgeben sein. Das Trägermaterial kann dabei zusammenhängend ausgebildet sein oder in Form von Trägermaterialteilkörpern vorliegen, wobei ein Trägermaterialteilkörper mit dem darin aufgenommenen Latentwärmespeichermaterial sowie bedarfsweise außerdem in den kapillaren Aufnahmeräumen aufgenommenen Restluftvolumina im Sinne der vorliegenden Anmeldung einen Latentwärmeteilkörper bildet.

Soweit auf eine Einbettungsmasse Bezug genommen worden ist, kann es sich dabei beispielsweise um Silikon, insbesondere um ein Silikon-Kautschuk, um Harz, Beton, Zement, Gips, Mörtel oder andere Materialien vergleichbarer Eigenschaften handeln, wobei auch Gemische bzw. Gemenge von mehreren dieser Substanzen als Einbettungsmassen Verwendung finden können. Die Auswahl des als Einbettungsmasse verwendeten Materials bzw. der Materialien kann bevorzugt in der Weise erfolgen, daß in Abstimmung auf das im Einzelfall gewählte Trägermaterial sich eine insgesamt für die Anwendung des Latentwärmekörpers vorteilhafte Gesamthärte oder Gesamtsteifigkeit des Latentwärmekörpers einstellt. Ebenso kann durch die Abstimmung insbesondere von Trägermaterial und Einbettungsmasse auch die gesamte Nachgiebigkeit, die Gesamtdichte, sowie weitere resultierende Eigenschaften, wie beispielsweise Wärmeleitfähigkeit, Wärmespeicherkapazität und dergleichen beeinflußt werden. Die Einbettung bzw. das umgeben des Trägermaterials mit darin enthaltenem Latentwärmespeichermaterial in die Einbettungsmasse erfolgt vorzugsweise im Sinne einer Vermischung, wobei sich vorzugsweise eine Ummantelung oder auch Tränkung mit der Einbettungsmasse einstellt, was insgesamt zu einem Verbund führt. Innerhalb eines derartigen Verbunds besteht somit insgesamt ein Zusammenhalt zwischen dem Trägermaterial, dem darin aufgenommenen Latentwärmespeichermaterial und der Einbettungsmasse, wobei das Trägermaterial zusammenhängend oder in Form mehrerer Trägermaterialteilkörper, die in dem Verbund zusammengehalten werden, vorliegen kann. Durch einen entsprechenden Verbund kann insbesondere bei auf den Einzelfall abgestimmter äußerer Formgebung ein Latentwärmekörper gebildet sein, alternativ kann ein Latentwärmekörper auch, wie noch in weiterer Einzelheit erläutert wird, aus einer Anzahl von derartigen Verbünden, die gemeinsam in eine Einlagerungsmasse eingelagert sind und im Sinne der Erfindung auch als Konglomerate bezeichnet werden, gebildet sein. Der durch die Einbettung erreichte Verbund stellt gegenüber bekannten Latentwärmekörpern insbesondere deshalb einen gebrauchstechnischen Vorteil dar, da bei aus mehreren Latentwärmeteilkörpern bestehenden Latentwärmekörpern zur Formgebung und zum Zusammenhalt auf die Verwendung einer äußeren Umhüllung, beispielsweise einer Folie, verzichtet werden kann. Ein weiterer gebrauchstechnischer Vorteil liegt, wie oben angesprochen, eben auch darin, daß durch die gezielte Abstimmung des verwendeten Materials auf das Trägermaterial gewünschte resultierende Eigenschaften des Latentwärmekörpers gezielt einstellbar sind. Bevorzugt ist vorgesehen, daß der Anteil der Einbettungsmasse an der Summe der Massen von Latentwärmespeichermaterial, Trägermaterial und Einbettungsmasse mindestens etwa 50% beträgt, wobei je nach Anwendungsfall auch niedrigere Massenanteile möglich, bzw. sinnvoll sind. Bevorzugt ist weiterhin, daß der Anteil des Latentwärmespeichermaterials, bezogen auf die gemeinsame Masse von Latentwärmespeichermaterial und Trägermaterial, zwischen etwa 40% und etwa 80% liegt und vorzugsweise etwa 60% beträgt. Der Anteil des Latentwärmespeichermaterials am Gesamtgewicht kann bevorzugt ca. 15% bis 25% betragen. Hinsichtlich der Trägermaterialkörper bzw. Latentwärmeteilkörper ist bevorzugt daran gedacht, daß diese eine granulatartige oder eine faserartige Gestalt aufweisen und daß eine typische geometrische Abmessung eines Trägermaterialteilkörpers bzw. eines Latentwärmeteilkörpers in der Größenordnung einzelner oder weniger Millimeter bis weniger Zentimeter liegt. Da sich das Latentwärmespeichermaterial je nach zugegebenem Mengenanteil aufgrund der Kapillarwirkung der Aufnahmeräume überwiegend im Inneren des Trägermaterials bzw. der Trägermaterialteilkörper befindet, ist hinsichtlich der äußeren Form und der Abmessungen im allgemeinen kein wesentlicher Unterschied zwischen Trägermaterialteilkörpern und Latentwärmeteilkörpern gegeben.

Weiter besteht die Möglichkeit, daß der Latentwärmekörper nach einer der bisher insgesamt vorgestellten Ausführungsvarianten eine Anzahl Konglomerate enthält, die jeweils aus einer Anzahl von Trägermaterialteilkörpern, in welchen Latentwärmespeichermaterial aufgenommen ist und die gemeinsam von einer Einbettungsmasse umgeben sind, gebildet sind, wobei die Konglomerate gemeinsam in eine Einlagerungsmasse eingelagert sind bzw. von dieser umgeben sind. Die zu einem einzelnen Konglomerat gehörenden Trägermaterialteilkörper erhalten durch die sie gemeinsam einbettende bzw. umgebende Einbettungsmasse einen Zusammenhalt, so daß je nach der bevorzugten Anzahl von darin eingeschlossenen Trägermaterialteilkörpern sowie der Größe der einzelnen Trägermaterialteilkörper Konglomerate unterschiedlicher, dem jeweiligen Anwendungsfall anpaßbarer Größe gebildet sein können. Als Einlagerungsmasse eignen sich insbesondere Materialien, die aus der Gruppe Silikon, insbesondere Silikon-Kautschuk, Harz, Gips, Zement, Beton ausgewählt sind, wobei auch Kombinationen dieser Werkstoffe zweckmäßig sein können. Bevorzugt ist daran gedacht, als Einlagerungsmasse ein anderes Material zu wählen als für die Einbettungsmasse. Je nach den individuellen Eigenschaften des im Einzelfall gewählten Trägermaterials, der Einbettungsmasse und der Einlagerungsmasse kann dann in vorteilhafter Weise durch Abstimmung der Mengenverhältnisse eine gewünschte Gesamteigenschaft des Latentwärmekörpers erreicht werden, wobei als Eigenschaft in diesem Zusammenhang z.B. die Festigkeit, Härte, Elastizität, Wärmeleitfähigkeit, Wärmespeicherkapazität und dergleichen gezielt einstellbar ist. In einer bevorzugten Ausführungsform kann dabei der Anteil der Einlagerungsmasse an der Gesamtmasse des Latentwärmekörpers mindestens etwa 50% betragen.

In einem Anwendungsbeispiel können Latentwärmeteilkörper aus jeweils einem Schnitzel einer mit Latentwärmespeichermaterial getränkten Pappe gebildet sein mit einem Massenanteil von beispielsweise 40-80%, vorzugsweise 60% Latentwärmespeichermaterial bezogen auf die Gesamtmasse des Latentwärmeteilkörpers. Ein Konglomerat kann eine Anzahl derartiger Trägermaterialteilkörper enthalten, die gemeinsam in ein Harz eingebettet sind und dabei von dem Harz ummantelt werden, so daß ein Zusammenhalt zwischen den Trägermaterialteilkörpern besteht. Der Massenanteil des Latentwärmespeichermaterials an der Gesamtmasse des Konglomerates kann bspw. etwa 30% betragen. Die zuvorbeschriebenen Konglomerate können ihrerseits beispielsweise Beton bis hin zu einem etwa hälftigen Mischungsverhältnis zugegeben sein, so daß der Massenanteil des Latentwärmespeichermaterial in dem gebildeten Latentwärmekörper bis vorzugsweise hin zu etwa 15% beträgt. Variationen dieses Anwendungsbeispieles können darin bestehen, daß anstelle des Harzes Silikon vorgesehen ist und/oder Latentwärmeteilkörper aus mit Latentwärmespeichermaterial getränktem Kieselerdegranulat vorgesehen sind. Bei derartigen Ausführungsformen hat sich überraschend herausgestellt, daß die Strukturfestigkeit des Betons nicht nachteilig beeinträchtigt wird, sondern daß diese unter Umständen sogar positiv beeinflußt wird. Dafür wesentlich ist, daß das Trägermaterial aufgrund der oben beschriebenen Größenordnung der Trägermaterialteilkörper durch die kapillaren Aufnahmeräume eine ausgeprägte Saugwirkung auf das Latentwärmespeichermaterial ausübt. Während im Gegensatz dazu etwa bei Verwendung pulverförmiger Trägermaterialien das hieran angelagerte Latentwärmespeichermaterial stets auch unmittelbar von der Einbettungsmasse umgeben würde und darin zu Festigkeitsverlusten führen würde, wird dies durch die zuvor erläuterte Aufnahme des Latentwärmespeichermaterials in den Trägermaterialteilkörpern wirksam vermieden. Ein wesentlicher Vorteil eines aus Trägermaterial, Latentwärmespeichermaterial und Einbettungsmasse sowie ggf. zusätzlicher Einlagerungsmasse gebildeten Latentwärmekörpers besteht auch darin, daß die Granulate bzw. die Fasern des Trägermaterials zusätzlich als Bewehrung dienen und dadurch die statische Stabilität erhöhen. Die Bedeutung der Einbettungsmasse (und ggf. der Einlagerungsmasse) besteht zunächst darin, vor ihrem Vernetzen bzw. Aushärten zunächst eine bestimmte gewünschte Fließfähigkeit bzw. leichte Verformbarkeit des mit den Latentwärmeteilkörpern gebildeten Gemenges zum Verarbeiten einzustellen, so daß dieses bspw. ausgerollt oder in Form gegossen werden kann. Nach der Vernetzung bzw. Aushärtung besteht die Funktion dagegen in einer Mitbestimmung der resultierenden o.g. Gesamteigenschaften des Latentwärmekörpers. Insgesamt sind die Funktionen von Stützmaterial, Latentwärmespeichermaterial, Einbettungsmasse und Einlagerungsmasse voneinander getrennt, so daß es als weiterem Vorteil zu keinen Funktionsüberschreitungen kommt. Bevorzugte Ausführungsformen des erfindungsgemäßen Latentwärmekörpers können z.B. im Bauwesen, wie etwa als Wand-, Boden- oder Deckenelemente, als Straßendecken, aber auch als Bekleidungsteile, hier etwa als Schuhsohlen, sowie außerdem bspw. als elastische Dünnschichtelemente oder Prothesen gegeben sein. Je nach Anwendungsfall kann der Anteil des Latentwärmespeichermaterials auf Paraffinbasis auch 15% bis 25% vom Gesamtgewicht des Latentwärmekörpers betragen.

Gegenstand der Erfindung ist weiterhin auch ein Verfahren zur Herstellung eines Latentwärmekörpers nach dem Oberbegriff von Anspruch 57. Zum Stand der Technik wird hier ebenfalls auf die WO 98/53264 verwiesen. Soweit darin als eine Weiterbildung des Herstellungsverfahrens die Möglichkeit beschrieben wird, daß das mit Latentwärmespeichermaterial getränkte Trägermaterial in eine Anzahl von Latentwärmeteilkörpern zertrennt werden kann, wird darin weiter auf die Möglichkeit hingewiesen, daß die Latentwärmeteilkörper des Latentwärmekörpers mit einer sie gemeinsam umschließenden Umhüllung, etwa eine die Außenkontur des Latentwärmekörpers umgebenden Folie, umhüllt sein können. Ein dementsprechend nach der WO 98/53264 gefertigter Latentwärmekörper weist dann eine Anzahl von Latentwärmeteilkörpern in seinem Inneren auf, die mehr oder minder lose mit ihren Oberflächen aneinander bzw. an die äußere Umhüllung stoßen. Davon ausgehend liegt dem weiteren Gegenstand der vorliegenden Erfindung die Aufgabe zugrunde, ein gattungsgemäßes Verfahren zur Herstellung eines Latentwärmekörpers gebrauchsvorteilhaft weiterzubilden.

Diese Aufgabe ist zunächst und im wesentlichen beim Gegenstand der Anspruches 57 gelöst, wobei darauf abgestellt ist, daß das mit Latentwärmespeichermaterial getränkte Trägermaterial mit einer Einbettungsmasse umgeben wird und daß ein Trägermaterial verwendet wird, das Holzfasern und/oder Pappe und/oder Kieselerdegranulat und/oder Diatomeenerde enthält. Dieses Verfahren erweist sich zunächst insofern als gebrauchsvorteilhaft, als daß eine gewisse Oberflächenversiegelung des Latentwärmekörpers erreicht wird, ohne daß dazu der Latentwärmekörper mit einer Umhüllung, bspw. mit einer Folie, ummantelt werden müßte. Als weiterer Vorteil kann, ausgehend von der geometrischen Form des mit Latentwärmespeichermaterial getränkten Trägermaterials, bei der Verarbeitung der Einbettungsmasse eine ggf. abweichende gewünschte Formgebung des Latentwärmekörpers erreicht werden, indem die Einbettungsmasse mit entsprechend angepaßten, ggf. unterschiedlichen Materialdicken verarbeitet wird. Durch die erfindungsgemäße Verwendung eines Trägermaterials, das Holzfasern und/oder Pappe und/oder Kieselerdegranulat und/oder Diatomeenerde enthält, werden in gewünschter Weise zugleich eine hohe kapillare Saugwirkung des Trägermaterials auf das Latentwärmespeichermaterial und, maßgeblich auch in Verbindung mit einer bevorzugt hohen spezifischen Außenfläche des Trägermaterials, eine problemlose und haltbare Anlagerung der Einbettungsmasse an das in seinen Aufnahmeräumen Latentwärmespeichermaterial enthaltende Trägermaterial erreicht. Mit dem vorgestellten Verfahren kann ein Latentwärmekörper beispielsweise ausgehend von einem einzelnen Trägermaterialkörper, d.h. von einem zusammenhängenden Trägermaterial, hergestellt werden. Ein solcher Trägermaterialkörper kann beispielsweise ein Formkörper sein, welcher das zuvor genannte Trägermaterial enthält und dessen geometrische Form derjenigen Form des gewünschten Latentwärmekörpers in einem vorangehenden Arbeitsschritt bereits weitgehend angepaßt worden ist. Beispielsweise besteht die Möglichkeit, daß ein derartiger Formkörper durch Verkleben und/oder Verpressen von Holzfasern und/oder Pappe und/oder Kieselerdegranulat und/oder Diatomeenerde hergestellt wird. Alternativ besteht beispielsweise auch die Möglichkeit, daß ein solcher Formkörper unmittelbar aus einem zusammenhängenden Stück Pappe bzw. Kieselerde bzw. Diatomeenerde hergestellt wird. Alternativ besteht auch die Möglichkeit, daß das mit Latentwärmespeichermaterial getränkte Trägermaterial bevor es mit der Einbettungsmasse umgeben wird in Latentwärmeteilkörper zerkleinert wird, wobei ein Latentwärmeteilkörper aus einem Trägermaterialteilkörper und darin aufgenommenem Latentwärmespeichermaterial sowie gegebenenfalls ebenfalls darin aufgenommenen Restluftvolumina gebildet wird. Als Ausgangsmaterial für diese Zerkleinerung kann ein mit Latentwärmespeichermaterial getränktes Trägermaterial auf Basis der zuvor beschriebenen Trägermaterialien verwendet werden. Eine Zerkleinerung kann beispielsweise durch Zerfasern, ein Zerhäckseln oder Zerschneiden, nicht jedoch durch ein Zermahlen bis zur Pulverform, erreicht werden. In einem weiteren Verfahrensschritt kann dann eine Anzahl von für den Latentwärmekörper vorgesehener Latentwärmeteilkörper gemeinsam mit der Einbettungsmasse umgeben werden. Bezüglich der geometrischen Größenverhältnisse der Latentwärmeteilkörper ist wesentlich, daß diese keinesfalls bis auf die Größe von Pulverkörnern zerkleinert werden, sondern daß bei der Zerkleinerung eine Größenordnung erhalten wird, in der die Saugfähigkeit des Trägermaterial erhalten ist. Hinsichtlich der Einbettungsmasse ist allgemein bevorzugt, daß diese, während das mit Latentwärmespeichermaterial getränkte Trägermaterial mit ihr umgeben wird, in einem fließfähigen und/oder in einem Knetfähigem Zustand verarbeitet bzw, in einem solchen Zustand gehalten wird. Die Verarbeitung kann bevorzugt einen Mischvorgang beinhalten, wobei die Vermischung der Latentwärmeteilkörper mit der Einbettungsmasse bspw. durch ein Verrühren und/oder ein Einkneten möglich ist. Weiterhin ist bevorzugt, daß die Einbettungsmasse, nachdem das mit Latentwärmespeichermaterial getränkte Trägermaterial von ihr umgeben worden ist, verfestigt wird. Dies kann bevorzugt durch einen Trocknungsprozeß erfolgen, bspw. unter Zufuhr von thermischer Energie. Des weiteren besteht auch die Möglichkeit, ein gezieltes Abbinden bzw. eine Aushärtung der Einbettungsmasse durch physikalische und/oder chemische Prozesse herbeizuführen. In einer bevorzugten Variante des vorgestellten Verfahrens ist vorgesehen, daß der Latentwärmekörper vor einer Verfestigung der Einbettungsmasse in eine Form gegossen wird, so daß nach der späteren Verfestigung der Einbettungsmasse ein Latentwärmekörper entsprechender Form erhalten wird. Alternativ oder kombinativ besteht die Möglichkeit, daß der Latentwärmekörper, bevor eine Verfestigung der Einbettungsmasse herbeigeführt wird, ausgewalzt wird, wodurch z.B. elastische Dünnschichtelemente erhalten werden können.

Das beschriebene Verfahren zur Herstellung eines Latentwärmekörpers kann auch in der Weise modifiziert werden, daß aus einer Anzahl von Trägermaterialteilkörpern mit darin aufgenommenem Latentwärmespeichermaterial durch ein gemeinsames Umgeben bzw. Einbetten der entsprechenden Latentwärmeteilkörper in die Einbettungsmasse ein Konglomerat gebildet wird und daß eine Anzahl von Konglomeraten gemeinsam in einer Einlagerungsmasse eingelagert wird, wobei unter Konglomeraten im Sinne der Erfindung Zusammenschlüsse der oben erläuterter Art verstanden werden. Dabei besteht die Möglichkeit, daß als Einlagerungsmasse grundsätzlich die auch bereits als Einbettungsmasse vorgeschlagenen Materialien Verwendung finden. Zweckmäßig kann dabei so vorgegangen werden, daß nach der Verarbeitung der Einbettungsmasse und einer unter Umständen gewünschten Formgebung eines Konglomerates zunächst eine Verfestigung der Einbettungsmasse herbeigeführt wird und daß in einem folgenden Arbeitsschritt eine Anzahl von Konglomeraten gemeinsam in der Einlagerungsmasse eingelagert wird. Hierbei ist wiederum bevorzugt, daß die Einlagerungsmasse in einer fließfähigen und/oder knetbaren Form verarbeitet wird, wobei in folgenden Verfahrensschritten zunächst eine Formgebung des Latentwärmekörpers und eine anschließende Verfestigung der Einlagerungsmasse erfolgen kann. In einer bevorzugten Variante des vorgeschlagenen Verfahrens wird so vorgegangen, daß als Einbettungsmasse und als Einlagerungsmasse unterschiedliche Materialien verwendet werden. Je nach ihren dann im allgemeinen ebenfalls unterschiedlichen physikalischen und chemischen Eigenschaften können dadurch unter Berücksichtigung der physikalischen und chemischen Eigenschaften des Trägermaterials und des Latentwärmespeichermaterials durch eine gezielte Abstimmung der jeweiligen Mengenanteile Latentwärmekörper hergestellt werden, die hinsichtlich der maßgeblichen Eigenschaften ein maßgeschneidertes Gesamtverhalten besitzen. So kann bei einem Latentwärmekörper durch das erfindungsgemäße Verfahren z.B. die Härte stufenlos eingestellt werden. Beispielsweise kann zur Herstellung eines Latentwärmekörpers aus Trägermaterial, Latentwärmespeichermaterial und Einbettungsmasse so vorgegangen werden, daß relativ harte paraffingetränkte Diatomeenerdekügelchen in gummiweiches, bei Raumtemperatur vernetzendes Silikon als Einbettungsmasse eingearbeitet werden, so daß insgesamt eine flexible Gesamtstruktur erhalten wird. Als ein anderes Extrem kann man z.B. paraffinhaltige, weiche PAP-Fasern, d.h. Holzfasern mit einer hohen Saugfähigkeit für Latentwärmespeichermaterial, in Beton als Einbettungsmasse einarbeiten, wodurch man einen insgesamt betonharten Speicherkörper erhält. Das in den verschiedenen Varianten beschriebene Herstellungsverfahren erweist sich auch insbesondere deshalb als gebrauchsvorteilhaft, da zum einen vor der Verfestigung der Einbettungsmasse bzw. der Einlagerungsmasse infolge der guten Fließ- bzw. Kneteigenschaften eine praktisch beliebige Formgebung des Latentwärmekörpers möglich ist, andererseits die gewählte Form nach der Verfestigung von Einbettungs- bzw- Einlagerungsmasse auch dann erhalten bleibt, wenn das Latentwärmespeichermaterial bei einem Gebrauch des Latentwärmekörpers durch Wärmezufuhr verflüssigt wird. Dabei ist bei der Anwendung des Verfahrens allgemein bevorzugt, daß das mit Latentwärmespeichermaterial getränkte Trägermaterial vollständig bzw. allseitig von der Einbettungsmasse umschlossen wird. Entsprechend ist bevorzugt, daß bei Verwendung einer Einlagerungsmasse die Konglomerate hierin vollständig bzw. allseitig umschlossen werden. Zusätzlich können bei der Erstinitialisierung (Ersterwärmung) des Latentwärmekörpers außen Paraffinreste abgeschmolzen werden und zur Versiegelung der Einbettungsmasse bzw. der Einlagerungsmasse beitragen.

Des weiteren kann auch das mit Bezug auf die vorangehenden Ansprüche 29 bis 39 beschriebene Verfahren zur Herstellung eines Latentwärmekörpers in der Weise weitergebildet werden, daß das mit Latentwärmespeichermaterial getränkte Trägermaterial mit einer Einbettungsmasse umgeben wird. In zu den vorangehenden Ausführungen analoger Weise kann dabei das mit Latentwärmespeichermaterial getränkte Trägermaterial zu Latentwärmeteilkörpern zerkleinert werden, wobei ein Latentwärmeteilkörper einen Trägermaterialteilkörper und darin aufgenommenes Latentwärmespeichermaterial sowie ggf. Luftvolumina enthält. Die erhaltenen Latentwärmeteilkörper können anschließend gemeinsam mit einer Einbettungsmasse umgeben werden. Auch ausgehend von dem hier in Bezug genommenen Verfahren kann ein Latentwärmekörper bereits durch die Einbettung von mit Latentwärmespeichermaterial getränktem Trägermaterial in der Einbettungsmasse in Verbindung mit einer gewünschten Formgebung und anschließenden Verfestigung der Einbettungsmasse hergestellt werden. Auch dieses Verfahren kann jedoch dahingehend erweitert werden, daß, wie oben erläutert, aus Latentwärmeteilkörpern und der Einbettungsmasse zunächst Konglomerate im Sinne dieser Anmeldung hergestellt werden und diese in einem späteren Verfahrensschritt mit einer Einlagerungsmasse umgeben werden, wodurch schließlich der Latentwärmekörper erhalten wird. Diesbezüglich wird zu weiteren Einzelheiten auf die obigen Ausführungen verwiesen. Ein Vorteil des vorgeschlagenen Verfahrens unter Verwendung von Einbettungs- und ggf. Einlagerungsmasse ist insbesondere auch, daß damit Latentwärmekörper unproblematisch ohne Statikverluste und ohne Emulgatoren herstellbar sind.

Nachstehend ist die Erfindung im weiteren anhand beigefügter Zeichnungen, die jedoch lediglich Ausführungsbeispiele darstellen, erläutert. Hierbei zeigt:
- Fig. 1: eine perspektivische Ansicht eines plattenförmigen Bauelements mit integriertem Latentwärmekörper;
- Fig. 2: eine Ausschnittsvergrößerung des Latentwärmekörpers gemäß Fig. 1 mit einem ersten Trägermaterial;
- Fig. 3: eine Ausschnittsvergrößerung des Latentwärmekörpers in Anlehnung an Fig. 1 mit einem zweiten Trägermaterial;
- Fig. 4: eine perspektivische Ansicht mit Aufbruch einer Elektrofußbodenheizung mit darin integrierten Latentwärmekörpern;
- Fig. 5: eine Ausschnittsvergrößerung einer aus Latentwärmeteilkörpern gebildeten Latentwärmekörpers gemäß Fig. 4;
- Fig. 6: eine perspektivische Ansicht einer Warmhalteplatte für Speisen in einer ersten Ausführungsform;
- Fig. 7: eine Schnittansicht einer Warmhalteplatte für Speisen gemäß Fig. 6;
- Fig. 8: eine perspektivische Ansicht einer Warmhalteplatte für Speisen in einer zweiten Ausführungsform;
- Fig. 9: eine Schnittansicht einer Warmhalteplatte gemäß Fig. 8;
- Fig. 10: einen Horizontalschnitt durch einen Transportbehälter mit darin integrierten Latentwärmekörpern;
- Fig. 11: eine perspektivische Ansicht eines erfindungsgemäßen Latentwärmekörpers mit Einbettungsmasse;
- Fig. 12: einen vergrößerten Teilschnitt des Latentwärmekörpers nach Fig. 11 entlang der Schnittlinie XII-XII;
- Fig. 13: einen Teilschnitt eines Latentwärmekörpers mit Einbettungsmasse und Einlagerungsmasse;
- Fig. 14: einen Latentwärmekörper mit Einbettungsmasse in Form einer Schuhsohle;
- Fig. 15: einen vergrößerten Teilschnitt des Latentwärmekörpers nach Fig. 14 entlang der Schnittlinie XV-XV;

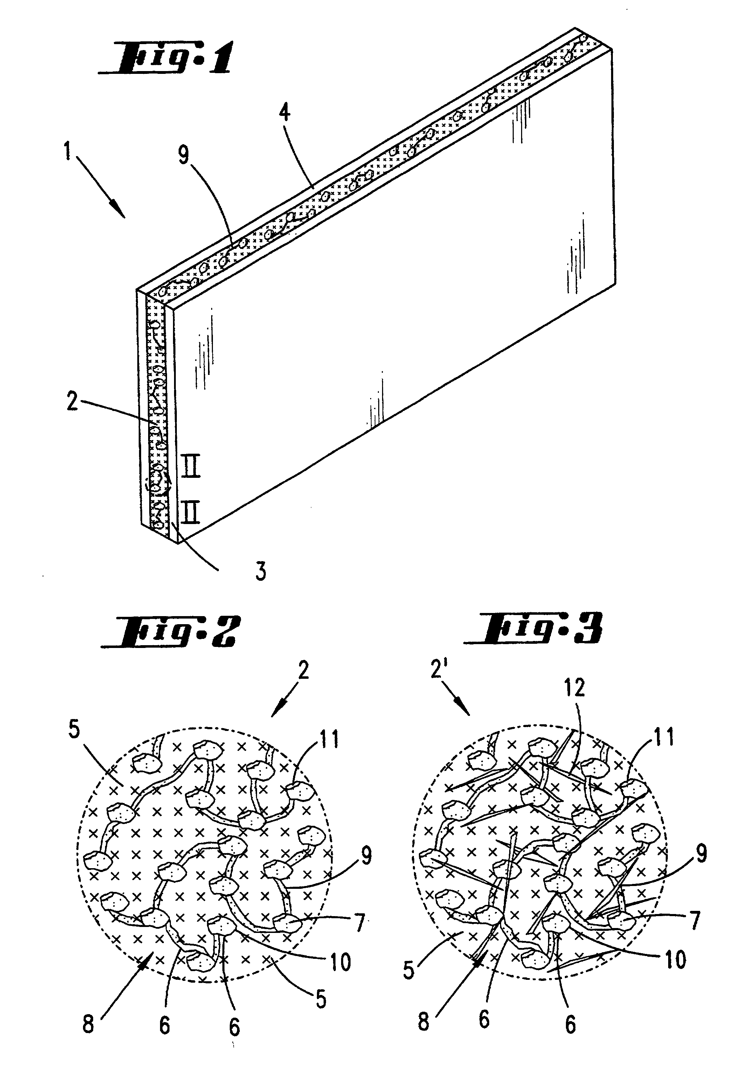

Dargestellt und beschrieben ist, zunächst mit Bezug auf Fig. 1, ein plattenförmiges Bauelement 1, das im wesentlichen aus einem erfindungsgemäßen Latentwärmekörper 2, der hier ebenfalls Plattenform aufweist, ausgebildet ist. Im einzelnen handelt es sich bei dem dargestellten Latentwärmekörper 2 um eine mit Latentwärmespeichermaterial getränkte Gipsplatte. Auf einer ersten, sich in Plattenebene erstreckenden Oberfläche ist der Latentwärmekörper 2 mit einer Abdeckung 3 aus einem Folienwerkstoff, im vorliegenden Fall aus Papier, versehen. Die mit der Abdeckung 3 versehene Oberfläche des Latentwärmekörpers weist im Einbauzustand des Bauelementes 1 in Richtung eines Raumes, zu dessen Abgrenzung bzw. Verkleidung das Bauelement 1 verwendet wird. Die gegenüberliegende Oberfläche des Latentwärmekörpers 2 trägt einen ebenfalls die gesamte Oberfläche überdeckenden Wetterschutz 4, der ebenfalls aus einem Folienmaterial hergestellt ist. Die jeweilige Verbindung zwischen dem Latentwärmekörper 2 und der Abdeckung 3 bzw. dem Wetterschutz 4 ist in herkömmlicher Weise mit einem in die jeweilige Kontaktebene eingebrachten Haftmittel erreicht. Alternativ oder kombinativ besteht die Möglichkeit, die Abdeckung 3 und den Wetterschutz 4 durch geeignete Verbindungsmittel, wie bspw. Klammern, Nieten oder dergleichen an dem Latentwärmekörper 1 zu fixieren und die Abdeckung 3 und/oder den Wetterschutz 4 aus anderen zweckmäßigen Materialien herzustellen, beispielsweise aus Metallfolie.

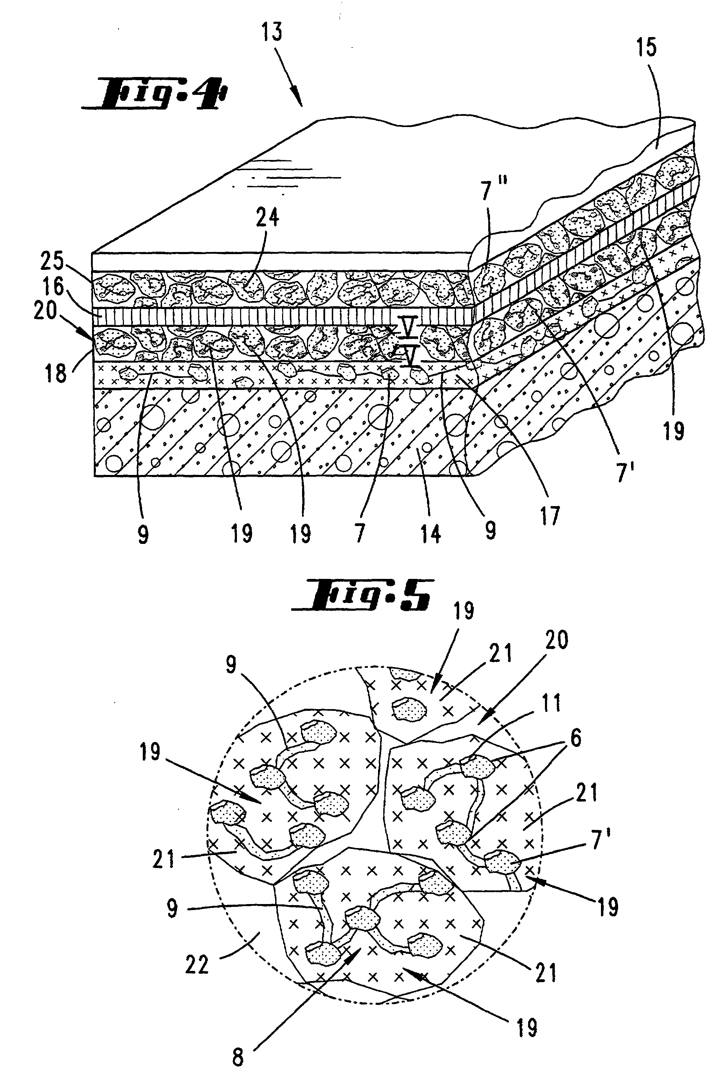

Fig. 2 zeigt eine Ausschnittsvergrößerung des Latentwärmekörpers 2 aus Fig. 1. Danach besteht der Latentwärmekörper 2 aus einem Trägermaterial 5, das im gezeigten Beispiel aus einem Mineralstoff mit einer offenen kapillaren Porenstruktur, in der konkreten Ausführungsform aus einem Gipswerkstoff, besteht und als zusammenhängende Struktur ausgebildet ist. Innerhalb des Trägermaterials 5 befinden sich kapillare Aufnahmeräume 6 für Latentwärmespeichermaterial 7, die im Beispiel der Fig. 2 von der offenen kapillaren Porenstruktur 8 des Gipswerkstoffes gebildet werden bzw. durch diese bedingt sind. Aus der stark vereinfachten und somit lediglich schematischen Darstellung geht hervor, daß die offene kapillare Porenstruktur 8 Kanäle 9 mit Erweiterungen 10 aufweist, welche sich gemeinsam labyrinthartig durch das Trägermaterial 5 erstrecken. Sowohl die Kanäle 9, als auch die Erweiterungen 10 sind dabei so bemessen, daß sie eine Kapillarwirkung auf verflüssigtes Latentwärmespeichermaterial ausüben und insoweit kapillare Aufnahmeräume 6 für das Latentwärmespeichermaterial 7 darstellen. Dadurch wird erreicht, daß zuvor verflüssigtes Latentwärmespeichermaterial bei der Herstellung des Latentwärmekörpers 2 aus der angrenzenden Umgebung durch die Saugwirkung zunächst von oberflächennahen Aufnahmeräumen 6 aufgenommen wird und von dort durch die Saugwirkung benachbarter Aufnahmeräume 6 fortschreitend in das Innere des Latentwärmekörpers 2 gelangt, wobei in die randnahen Aufnahmeräume 6 durch deren Verbindungen zur Umgebung eine gewünschte Menge an Latentwärmespeichermaterial 7 nachströmt. Insoweit beschreibt Fig. 2 einen Gleichgewichtszustand, in dem das Latentwärmespeichermaterial 7 gleichmäßig über die kapillaren Aufnahmeräume 6 hinweg verteilt vorliegt. Dabei beschreibt die in einer Ebene dargestellte Verteilung der Aufnahmeräume 6 auch deren qualitative Verteilung in den weiteren Raumrichtungen. Wie durch die jeweiligen Flächenverhältnisse angedeutet ist, beträgt damit der Massenanteil des Latentwärmespeichermaterials 7, bezogen auf die Gesamtmasse des Latentwärmekörpers 2, in dem in Fig. 2 beschriebenen Beispiel etwa 25%. In weiterer Einzelheit ist dargestellt, daß die Aufnahmeräume 6 nicht vollständig mit Latentwärmespeichermaterial 7 ausgefüllt sind, sondern daß Restluftvolumina 11 darin verbleiben, die im gezeigten Beispiel ebenfalls eine gleichmäßige Verteilung aufweisen. Die Restluftvolumina 11 sind in der Weise bemessen, daß sie in den kapillaren Aufnahmeräumen 6 eine temperaturabhängige Volumenänderung des Latentwärmespeichermaterials 7 von maximal 10% des Latentwärmespeichermaterialvolumens aufnehmen. In Fig. 1 sind die Kanäle 9 nur durch einfache Linien schematisch angedeutet.

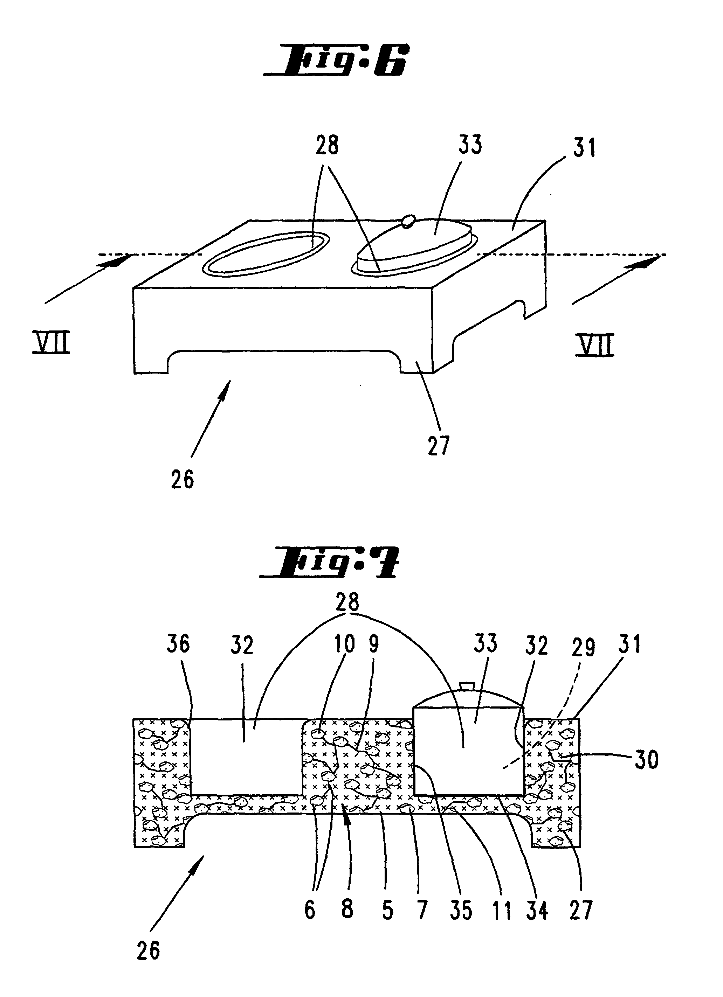

In Anlehnung an Fig. 1 zeigt Fig. 3 eine Ausschnittsvergrößerung eines Latentwärmekörpers 2', der sich von dem in Fig. 2 gezeigten Latentwärmekörper 2 lediglich durch zusätzlich in dem Trägermaterial 5 vorhandene Faserelemente 12 unterscheidet. Insofern sind übereinstimmende Bestandteile der Latentwärmekörper 2, 2' in den Fig. 2 und 3 mit gleichen Bezugszeichen beschriftet. Der ebenfalls schematischen Fig. 3 ist zu entnehmen, daß die Faserelemente 12 eine langgestreckte und unregelmäßige Gestalt besitzen und bei einer regellosen räumlichen Ausrichtung etwa gleichmäßig innerhalb des Trägermaterials 5 verteilt angeordnet sind. Weiter wird deutlich, daß in Fig. 3 die kapillaren Aufnahmeräume 6 nicht ausschließlich durch die offene kapillare Porenstruktur 8 des mineralischen Gipswerkstoffes gebildet wird, sondern daß die Faserelemente 12 teilweise Bestandteil der Berandung der Kanäle 9 und der Erweiterungen 10 sind. Weiter besteht die - in Fig. 3 nicht zeichnerisch wiedergegebene - Möglichkeit, daß zusätzlich kapillare Aufnahmeräume 6 vollständig von Faserelementen 12 berandet sind.

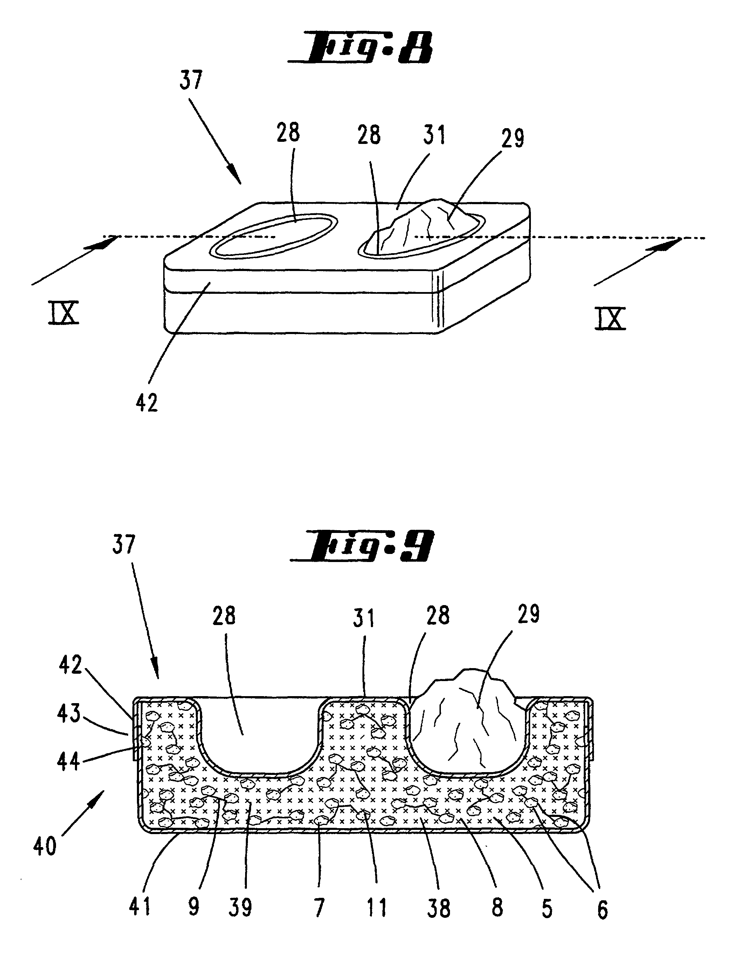

Fig. 4 zeigt in einer perspektivischen Teilansicht mit einem Teilaufbruch eine Elektrofußbodenheizung 13, welche auf einer Rohdecke 14 aus Beton angeordnet ist und die eine obere Abdeckung 15 aus einem dafür üblichen Werkstoff, bspw. aus einem Trockenstrich und einem ggf. darüber verlegten Bodenbelag, besitzt. Zwischen der Rohdecke 14 und der Abdeckung 15 sind schematisch dargestellte Heizregister 16 vorgesehen, bei denen es sich vorliegend um Elektro-Heizregister in einer dafür üblichen Bauweise handelt. Dabei ist zunächst zwischen der Rohdecke 14 und dem Heizregister 16 ein plattenförmiger Latentwärmekörper 17 angeordnet, der hinsichtlich seiner Bestandteile und deren strukturellen inneren Anordnung und Verteilung mit dem in Fig. 2 in einer Ausschnittsvergrößerung dargestellten Aufbau übereinstimmt. Abweichend von dem in Fig. 4 gezeigten Ausführungsbeispiel besteht auch die Möglichkeit, daß unmittelbar oberhalb der Rohdecke 14 zusätzlich eine Wärmeisolationsschicht, bspw. eine Styroporschicht, vorgesehen ist. Bei der in Fig. 4 gezeigten Anordnung befindet sich zwischen dem plattenförmigen Latentwärmekörper 17 und dem Heizregister 16 eine erste Lage 18 mit einem aus granulatartigen Latentwärmeteilkörpern 19 gebildeten Latentwärmekörper 20. Bei der ersten Lage 18 handelt es sich insofern um eine Schüttung aus sich aufeinander abstützenden, in Granulatform vorliegenden Latentwärmeteilkörpern 19, die in ihrer Gesamtheit den Latentwärmekörper 20 bilden.

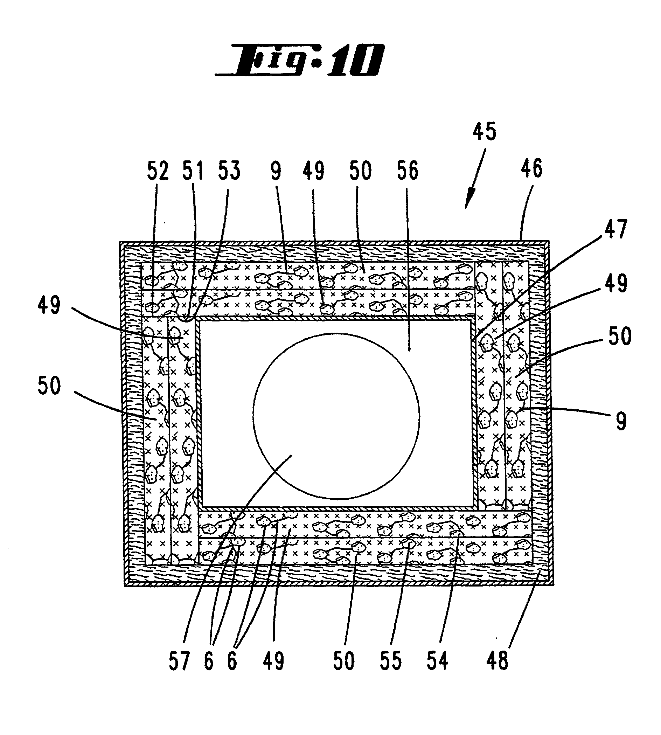

Wie sich in weiterer Einzelheit aus Fig. 5 ergibt, enthält ein einzelner Latentwärmeteilkörper 19 einen Trägermaterialteilkörper 21 und das in den darin enthaltenen kapillaren Aufnahmeräumen 6 vorhandene Latentwärmespeichermaterial 7' sowie das ebenfalls darin enthaltene Restluftvolumen 11. Daraus folgt, daß ein Latentwärmeteilkörper 19 in seinem Inneren eine zusammenhängende Struktur mit einer offenen kapillaren Porenstruktur 8 ausbildet, während der Latentwärmekörper 20 im Ganzen keine entsprechend zusammenhängende Struktur besitzt. Vielmehr weist er in seinem Inneren zwischen den Latentwärmeteilkörpern 19 Zwischenräume 22 auf, die je nach Form und Größe ebenfalls eine kapillare Saugwirkung auf das verflüssigte Latentwärmespeichermaterial ausüben können. Während dies in Fig. 5 nicht zeichnerisch dargestellt ist, besteht damit die Möglichkeit, daß sich in einem Gleichgewichtszustand Latentwärmespeichermaterial 7 auch in den Zwischenräumen 22 befindet und damit zusätzlich zum gegenseitigen Zusammenhalt der Latentwärmeteilkörper 19 beiträgt. In dem in den Figuren 4 und 5 gezeigten Ausführungsbeispiel ist vorgesehen, daß das in die Aufnahmeräume 6 der Latentwärmeteilkörper 19 aufgenommene Latentwärmespeichermaterial 7 eine Phasenumwandlungstemperatur von 52°C besitzt.

Weiterhin ist zwischen dem Heizregister 16 und der Abdeckung 15 eine zweite Lage 23 mit einem aus Latentwärmeteilkörpern 24 gebildeten Latentwärmekörper 25 angeordnet. Die zweite Lage 23 unterscheidet sich von der ersten Lage 18 lediglich durch die Art des in den jeweiligen kapillaren Aufnahmeräumen 6 aufgenommen Latentwärmespeichermaterials 7''. Während in der ersten Lage 18, wie ausgeführt, ein Latentwärmespeichermaterial 7' mit einer Phasenumwandlungstemperatur von 52°C aufgenommen ist, ist in der zweiten Lage 23 ein anderes Latentwärmespeichermaterial 7'' mit einer abweichenden, im vorliegenden Fall 42°C betragenden und somit niedrigeren Phasenumwandlungstemperatur aufgenommen. Prinzipiell besteht hier auch die Möglichkeit, andere Phasenumwandlungstemperaturen vorzusehen.

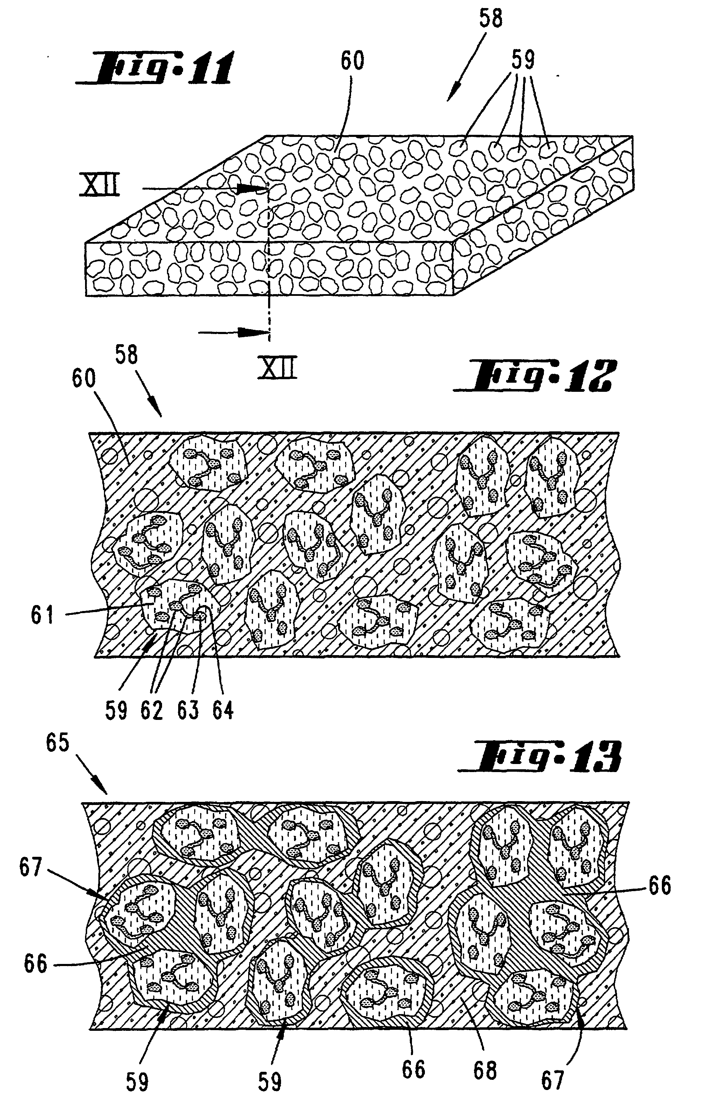

Fig. 6 zeigt in einer perspektivischen Ansicht eine erste Ausführungsform einer Warmhalteplatte 26 für Nahrungsmittel, insbesondere für Reis. Die Warmhalteplatte 26 weist einen Plattengrundkörper 27 mit zwei daran ausgebildeten Aufnahmen 28 für Nahrungsmittel 29 auf. Dabei ist darauf abgestellt, daß der Plattengrundkörper 27 einen erfindungsgemäßen Latentwärmekörper 30 enthält. Im gezeigten Beispiel besteht der Plattengrundkörper 27 sogar vollständig aus dem Latentwärmekörper 30, welcher eine entsprechende Formgebung aufweist.

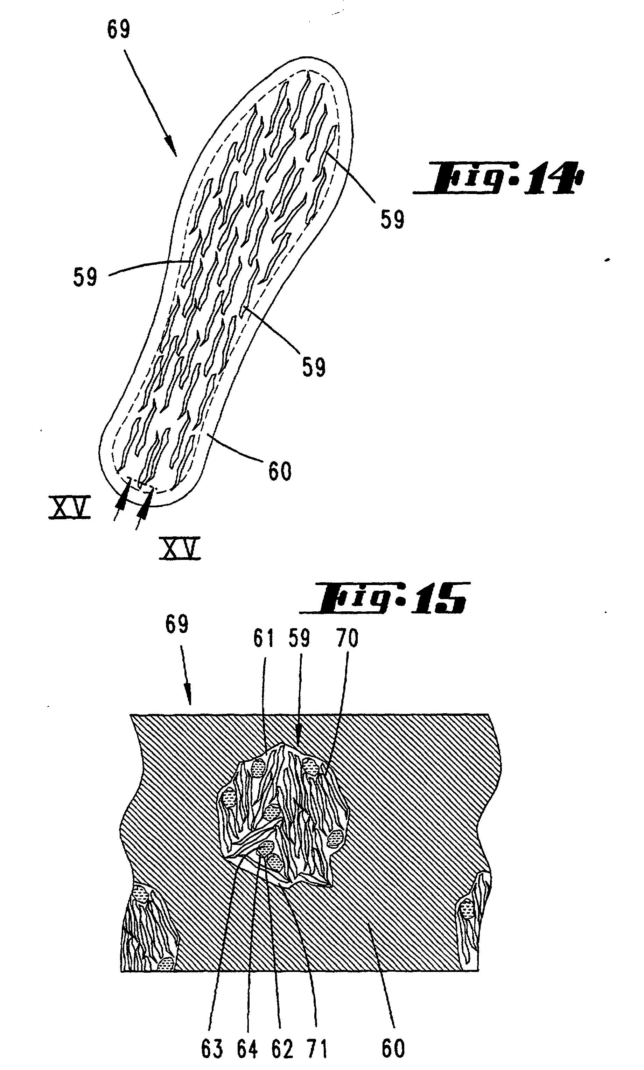

Wie in der zugeordneten Schnittansicht in Fig. 7 durch die schematische Darstellung des Plattengrundkörpers 27 angedeutet ist, entspricht der innere Aufbau des Latentwärmekörpers 30 der in Fig. 2 schematisch dargestellten Struktur. Insofern weist auch der Latentwärmekörper 30 ein Trägermaterial 5 aus einem Gipswerkstoff und darin enthaltene kapillare Aufnahmeräume 6 auf. Bei diesen handelt es sich im einzelnen um Kanäle 9 und Erweiterung 10, welche gemeinsam eine offene kapillare Porenstruktur 8 ausbilden. Auch in Verbindung mit der Warmhalteplatte 26 ist vorgeschlagen, daß der Latentwärmekörper 30 einen Massenanteil von etwa 25% Latentwärmespeichermaterial, bezogen auf die Gesamtmasse des Latentwärmekörpers 30, beinhaltet und daß gleichmäßig über die kapillaren Aufnahmeräume 6 verteilte Restluftvolumina 11 temperaturabhängige Volumenänderungen des Latentwärmespeichermaterials 7 von maximal 10% des Latentwärmespeichermaterialvolumens aufnehmen. Hinsichtlich der baulichen Ausgestaltung wird vorgeschlagen, daß die beiden Aufnahmen 28 jeweils eine in die Oberseite 31 des Plattengrundkörpers 27 integrierte Ausnehmung 32 aufweisen. Die Verwendung einer derartigen Warmhalteplatte 26 kann in der Weise erfolgen, daß sie zunächst in einem zeichnerisch nicht dargestellten Ofen auf eine Temperatur oberhalb der Phasenumwandlungstemperatur des Latentwärmespeichermaterials 7 vorgewärmt wird, wobei im Sinne einer bestmöglichen Ausnutzung der Wärmespeicherkapazität eine gleichmäßige Durchwärmung des Plattengrundkörpers 27 anzustreben ist. Nach Beendigung des Aufheizvorganges kann die Warmhalteplatte 26 aus dem Ofen genommen werden und ein Behälter, bspw. - wie in den Figuren 6 und 7 dargestellt - ein Topf 33, in dessen Innerem sich warmzuhaltende, nicht näher dargestellte Nahrungsmittel 29 befinden, in die Aufnahmen 28 hineingegeben werden. Sofern bzw. sobald der Topf 33 eine niedrigere Außentemperatur als die Oberfläche der Warmhalteplatte 26 aufweist, erfolgt eine Wärmeübertragung von der Warmhalteplatte 26 auf den Topf 33 und von dort auf die darin enthaltenen Nahrungsmittel 29, im Beispiel der Figuren 6 und 7 im einzelnen nicht zeichnerisch dargestellter Reis. Wie sich besonders aus Fig. 7 deutlich ergibt, sind die Ausnehmungen 28 hinsichtlich ihrer Abmessungen auf die Form des Topfes 33 in der Weise abgestimmt, daß eine unmittelbare gegenseitige Anlage sowohl am Boden 34, als auch an den Seitenwänden 35 entsteht. Somit kann ein großflächiger und nahezu ungestörter Wärmeübergang bevorzugt durch Wärmeleitung erfolgen. Um ein Einsetzen des Topfes 33 in eine Ausnehmung 28 zu erleichtern ist entlang des oberen Randes der Ausnehmungen 28 bezüglich des Querschnittes eine umlaufende Rundung 36 vorgesehen. Da sich die Nahrungsmittel gemäß dem Ausführungsbeispiel der Figuren 6 und 7 im Inneren eines separaten Topfes 33 befinden und somit nur in mittelbaren Kontakt mit der Warmhalteplatte 26 gebracht werden, kann die Warmhalteplatte auch unter hygienischen Gesichtspunkten besonders einfach ausgestaltet sein. Insbesondere kann dabei auf eine äußere Umhüllung vollständig verzichtet werden, da auch ein Ausschwitzen des Latentwärmespeichermaterials aufgrund des erfindungsgemäßen Aufbaues des Latentwärmekörpers 30 zumindest bei einer Überschreitung der Phasenumwandlungstemperatur des Latentwärmespeichermaterials 7 von 30 bis 40°K nicht zu befürchten ist.

Die Figuren 8 und 9 betreffen eine zweite Ausführungsform einer Warmhalteplatte 37 für Nahrungsmittel 29, insbesondere für Reis. Die Warmhalteplatte 37 weist einen Plattengrundkörper 38 auf, der einen Latentwärmekörper 39 enthält. Der Latentwärmekörper 39 unterscheidet sich hinsichtlich seiner Bestandteile und seiner inneren Struktur nicht von dem in den Figuren 6 und 7 dargestellten Latentwärmekörper 30. Unterschiede demgegenüber betehen jedoch hinsichtlich der äußeren Formgebung sowie darin, daß der Latentwärmekörper 39 von einer für Latentwärmespeichermaterial 7 undurchlässigen Umhüllung 40, welche im konkreten Beispiel aus einer gut wärmeleitfähigen Metallfolie gebildet ist, umgeben wird. Im einzelnen weist die Umhüllung 40 ein Unterteil 41 auf und ein Oberteil 42, welche im Bereich einer gemeinsamen umlaufenden Überlappung 43 durch eine Klebschicht 44 miteinander verbunden sind. Der gegenüber der in den Figuren 6 und 7 gezeigten ersten Ausführungsform einer Warmhalteplatte wesentliche Unterschied besteht somit darin, daß die Nahrungsmittel 29, bzw. der Reis, nach dem Erwärmen der Warmhalteplatte 37 in einem Ofen unmittelbar in die in die Oberseite 31 integrierten Aufnahmen 28 eingegeben wird, so daß kein zusätzlicher Behälter erforderlich ist. Die Umhüllung 40 bewirkt einerseits eine Separierung der Nahrungsmittel 29 von dem Latentwärmekörper 39 und erlaubt andererseits eine einfache Reinigung der Warmhalteplatte 37 ohne die Gefahr von Beschädigungen.

Fig. 10 zeigt in einem Horizontalschnitt einen Transportbehälter 45 mit einem Außengehäuse 46 und einem darin mit einem Zwischenraum beabstandet aufgenommenen Innengehäuse 47. Das Außengehäuse 46 ist zusätzlich mit einer Wärmedämmung 48, im vorliegenden Fall mit einer Styroporschicht, ausgekleidet. Dabei wird darauf abgestellt, daß in dem verbleibenden Zwischenraum Latentwärmekörper 49, 50 angeordnet sind. In dem gezeigten Beispiel besitzen die Latentwärmekörper 49, 50 jeweils eine plattenartige Form, wobei sich die Plattenebene senkrecht zur Zeichenebene erstreckt. In dem konkreten Beispiel sind vier flächenparallel berührende Paare aus jeweils einem Latentwärmekörper 49 und einem Latentwärmekörper 50 gebildet, wobei die Paare in dem Zwischenraum zwischen dem Innengehäuse 47 und dem Außengehäuse 46 bzw. der Wärmedämmung 48 versetzt zueinander angeordnet sind. Die Latentwärmekörper 49 grenzen dabei jeweils an das Innengehäuse 47 an, während die Latentwärmekörper 50 jeweils dem Außengehäuse 46 zugewandt sind. Weiter ist vorgesehen, daß jeweils benachbarte Stirnflächen 51, 52 der Latentwärmekörper 49, 50 an über das Innengehäuse 47 hervorstehende Flächenbereiche 53 eines benachbarten Latentwärmekörpers 49 anliegen, so daß keine durchgehenden Hohlräume zwischen den Latentwärmekörperpaaren bestehen. Die Latentwärmekörper 49, 50 weisen im gezeigten Ausführungsbeispiel prinzipiell die gleichen Bestandteile und die gleiche innere Struktur wie der in Fig. 2 dargestellte Latentwärmekörper 2 auf. Unterschiede können lediglich hinsichtlich der Phasenumwandlungstemperaturen der jeweiligen Latentwärmespeichermaterialien 54, 55 bestehen, so daß in Abhängigkeit von der Umgebungstemperatur des Außengehäuses 46 und der gewünschten Temperatur im Innenraum 56 des Innengehäuses 47 durch einen mehrstufigen Speicher eine optimale Speicherwirkung eingestellt werden kann. Der Transportbehälter 45 weist ferner einen nicht dargestellten Boden und einen bspw. mit Scharnieren verschwenkbaren Deckel auf, wobei im Boden- und im Deckelbereich zweckmäßig ebenfalls ein Verbundaufbau aus einer Wärmedämmung und aus Latentwärmekörpern vorgesehen ist. Der dargestellte Transportbehälter 45 dient zum Transport eines im Innenraum 56 aufgenommenen Gutes 57, das während des Transports eine möglichst gleichbleibende Temperatur behalten soll. Sofern die Temperatur des Gutes 57 oberhalb der Umgebungstemperatur liegen soll, können die Latentwärmekörper 49, 50 vor dem Transport in einem Ofen erwärmt und anschließend in den Zwischenraum zwischen dem Außen- und dem Innengehäuse eingesetzt werden. Sofern dagegen die Transporttemperatur unterhalb der Umgebungstemperatur liegen soll, können die Latentwärmekörper 49, 50 vor dem Transport entsprechend abgekühlt werden und dann in den Transportbehälter eingesetzt werden. Der in Fig. 10 gezeigte Transportbehälter 45 kann somit vorteilhaft für unterschiedliche Zwecke eingesetzt werden, wobei jeweils Latentwärmekörper 49, 50 ausgewählt werden, in denen Latentwärmespeichermaterial 54, 55 mit speziell auf die konkreten Transportbedingungen abgestimmten Phasenumwandlungstemperaturen aufgenommen ist.

Ergänzend wird angemerkt, daß die in Verbindung mit den Fig. 1 bis 10 beschriebenen Latentwärmekörper alternativ oder kombinativ zu den im Einzelfall beschriebenen Merkmalen auch einzelne oder mehrere der weiteren Merkmale aufweisen können, wie diese im allgemeinen Teil der Beschreibung erläutert worden sind.

In Fig. 11 ist in einer perspektivischen Ansicht ein erfindungsgemäßer Latentwärmekörper 58 dargestellt, bei dem eine Vielzahl von zunächst vereinfacht dargestellten Latentwärmeteilkörpern 59 von einer gemeinsamen Einbettungsmasse 60 umgeben ist. Wie sich in weiterer Einzelheit aus dem vergrößerten Teilschnitt in Fig. 12 ergibt, weist jeder der Latentwärmeteilkörper 59 einen Trägermaterialteilkörper 61 auf, bei dem es sich im gezeigten Beispiel um ein Granulatkorn aus Diatomeenerde handelt. Der Trägermaterialteilkörper 61 weist eine Größenordnung auf, bei der sich in seinem Inneren eine Vielzahl von kapillaren Aufnahmeräumen 62 befindet, wobei in der Praxis die Anzahl der kapillaren Aufnahmeräume in einem Trägermaterialteilkörper weitaus höher sein kann, als dies in der stark vereinfachten Darstellung zum Ausdruck kommen kann. Dies gilt entsprechend für die Größe der einzelnen kapillaren Aufnahmeräume 62, die in Wirklichkeit weit unter der in Fig. 12 wiedergegebenen Größe liegen kann. In weiterer Einzelheit ist zu erkennen, daß innerhalb einzelner kapillarer Aufnahmeräume 62 jeweils Latentwärmespeichermaterial 63 aufgenommen ist, dies unter Beibehaltung von Restluftvolumina 64. Im gezeigten Ausführungsbeispiel bilden die kapillaren Aufnahmeräume 62 innerhalb der Trägermaterialteilkörper 61 eine labyrinthartige Struktur, in dem das Latentwärmespeichermaterial 63 auf Paraffinbasis aufgenommen ist. Die einzelnen Latentwärmeteilkörper 59 sind gemeinsam von der Einbettungsmasse 60 umgeben, bei der es sich im gezeigten Beispiel um Beton handelt. Durch die Einbettungsmasse 60 ist zwischen den Trägermaterialteilkörpern ein dauerhafter Zusammenhalt gegeben, der auch bei Verflüssigung des Latentwärmespeichermaterials erhalten bleibt. Die in Figur 11 zum Ausdruck gebrachte Plattenform des Latentwärmekörpers 58 wurde bei der Herstellung dadurch erreicht, daß das aus den Latentwärmeteilkörpern 59 und der Einbettungsmasse 60 gebildete Gemenge in einem noch fließfähigen Gesamtzustand, d.h. vor dem Abbinden des Betons, in eine entsprechende Form gegossen wurde. Fig. 12 ist weiter zu entnehmen, daß der Anteil der Einbettungsmasse 60 an der Gesamtmasse des Latentwärmekörpers 58 etwa 50% beträgt.

In Fig. 13 ist in einem Teilschnitt ein gegenüber den Figuren 11 und 12 insofern modifizierter Latentwärmekörper 65 beschrieben, als darin die einzelnen Latentwärmeteilkörper 59 zunächst in jeweils geringerer Anzahl von einer Einbettungsmasse 66, im dargestellten Beispiel von Silikon, umgeben sind. Überwiegend sind dabei Konglomerate 67 gebildet, die jeweils aus einer Mehrzahl von gemeinsam mit der Einbettungsmasse 66 umgebenen Latentwärmeteilkörpern 59 bestehen. Im gezeigten Beispiel ist durch die Verwendung von Silikon als Einbettungsmasse 66 nach dessen Vernetzung im Gebrauchszustand ein dauerhafter und in gewissen Grenzen nachgiebiger bzw. elastischer Zusammenhalt zwischen den Latentwärmeteilkörpern 59 eines Konglomerates 67 erreicht. Dabei ist naheliegend, daß in der Praxis die Anzahl der Latentwärmeteilkörper 59 je Konglomerat 67 stark variieren kann und dabei insbesondere auch die in der vereinfachten Darstellung wiedergegebenen Anzahlen erheblich überschreiten kann. Es ist jedoch, wie ebenfalls dargestellt, auch möglich, daß einzelne Latentwärmeteilkörper für sich allein von der Einbettungsmasse 66 umgeben sind. In Fig. 3 ist weiterhin dargestellt, daß die Konglomerate 67 gemeinsam von einer Einlagerungsmasse 68 umgeben sind, bei der es sich in dem Ausführungsbeispiel um Beton handelt. Durch die Einlagerungsmasse 68 ist dementsprechend ein Zusammenhalt zwischen den Konglomeraten 67 hergestellt, so daß sich der in Fig. 13 gezeigte Latentwärmekörper 56 äußerlich nicht oder nur unwesentlich von dem in den Figuren 11 und 12 gezeigten Latentwärmekörper 58 unterscheiden kann.

In Fig. 14 ist ein weiteres Ausführungsbeispiel eines erfindungsgemäßen Latentwärmekörpers 69 in Gestalt einer Schuhsohle dargestellt. Unter Verwendung der bereits zu den Figuren 11 und 12 verwendeten Bezugszeichen weist der Latentwärmekörper 69 eine Einbettungsmasse 60 auf, bei der es sich jedoch im hier beschriebenen Beispiel um Silikon handelt. Von der Einbettungsmasse 60 ist eine Vielzahl von Latentwärmeteilkörpern 59 umgeben, wobei der Massenanteil des Silikons an der Gesamtmasse des Latentwärmekörpers 69 etwa 50% beträgt. Durch das als Einbettungsmasse 60 verwendete Silikon ist zwischen den Latentwärmeteilkörpern 59 ein dauerhafter Zusammenhalt gegeben, wobei der Latentwärmekörper 69 insgesamt eine hohe Nachgiebigkeit besitzt und dadurch eine leichte Verformbarkeit und gute Komforteigenschaften bei seinem Gebrauch besitzt.

Wie sich in Verbindung mit dem in Figur 15 gezeigten vergrößerten Teilschnitt des Latentwärmekörpers 69 ergibt, handelt es sich bei den hierin enthaltenen Latentwärmeteilkörpern 59 um Pappeschnitzel mit darin in kapillaren Aufnahmeräumen 62 aufgenommenem Latentwärmespeichermaterial 63 auf Paraffinbasis. Es ist ebenfalls erkennbar, daß in den kapillaren Aufnahmeräumen 62 auch noch ein Restluftvolumen 64 gebildet ist. Der in dem Latentwärmeteilkörper 59 gemäß Fig. 14 enthaltene Trägermaterialteilkörper, d.h. der Pappeschnitzel, weist eine Vielzahl von vereinfacht dargestellten Fasern 70 aus Holz bzw. Zellulose auf, die einen Zusammenhalt durch ein bei der Pappeherstellung übliches Bindemittel erfahren. Im Inneren des Trägermaterialteilkörpers 61, im Beispiel des Pappeschnitzels, sind zwischen den Fasern 70 außerdem kapillare Aufnahmeräume 62 gebildet, in denen das Latentwärmespeichermaterial 63 auf Paraffinbasis und die Restluftvolumina 64 aufgenommen sind. Obwohl sich dies nicht aus der Darstellung ergibt, können die kapillaren Aufnahmeräume dabei bevorzugt miteinander verbunden sein. Die im dargestellten Beispiel langgestreckten Pappeschnitzel können durch eine vorangehende Zerkleinerung von Pappe, beispielsweise durch Zerreißen oder Zerschneiden, gebildet sein, wobei anstelle der langgestreckten Form auch abweichende Geometrien, beispielsweise runde Plättchen von etwa der Form einer kleineren Münze, verwendbar sind. Die Trägermaterialteilkörper können andererseits auch eine fadenartige Form aufweisen und dabei etwas dicker als Haare sein. Wesentlich ist, daß das Trägermaterial nur soweit zerkleinert wird, bzw. eine solche Abmessung aufweist, daß darin die kapillaren Aufnahmeräume 62 erhalten sind, so daß eine gute Saugfähigkeit des Trägermaterials hinsichtlich des Latentwärmespeichermaterials 63 gewährleistet ist.

Gegenstand der Erfindung, der allein oder in Kombination mit einem der vorbeschriebenen Gegenstände auch Bedeutung hat, ist auch ein Latentwärmekörper 1,17,20,30,39,49,50, bei welchem die Faserelemente 12 in dem Trägermaterial verteilt angeordnet sind.

Gegenstand der Erfindung, der allein oder in Kombination mit einem der vorbeschriebenen Gegenstände auch Bedeutung hat, ist auch ein Latentwärmekörper 1,17,20,30,39,49,50, bei welchem der Massenanteil des Latentwärmespeichermaterials 7,7',7'',54, 55, bezogen auf die Gesamtmasse des Latentwärmekörpers 1,17,20,30,39,49,50, 5 bis 50%, vorzugsweise 25% oder weiter vorzugsweise 40 bis 50% beträgt.

Gegenstand der Erfindung, der allein oder in Kombination mit einem der vorbeschriebenen Gegenstände auch Bedeutung hat, ist auch ein Latentwärmekörper bei welchem das Restluftvolumen 11 gleichmäßig über die kapillaren Aufnahmeräume 6 verteilt ist.

Gegenstand der Erfindung, der allein oder in Kombination mit einem der vorbeschriebenen Gegenstände auch Bedeutung hat, ist auch ein Latentwärmekörper 1,17,20,30,39,49,50, bei welchem das Latentwärmespeichermaterial 7,7',7'',54,55 einen Anteil an Mineralölen und Polymeren enthält.

Gegenstand der Erfindung, der allein oder in Kombination mit einem der vorbeschriebenen Gegenstände auch Bedeutung hat, ist auch ein Latentwärmekörper 1,17,20,30, 39,49,50, welcher eine Umhüllung 40 aufweist.

Gegenstand der Erfindung, der allein oder in Kombination mit einem der vorbeschriebenen Gegenstände auch Bedeutung hat, ist auch ein Latentwärmekörper bei welchem die Umhüllung 40 aus einem Folienmaterial besteht.

Gegenstand der Erfindung, der allein oder in Kombination mit einem der vorbeschriebenen Gegenstände auch Bedeutung hat, ist auch ein Latentwärmekörper bei welchem die Umhüllung 40 für Latentwärmespeichermaterial 7,7',7'',54,55 undurchlässig ist.

Gegenstand der Erfindung, der allein oder in Kombination mit einem der vorbeschriebenen Gegenstände auch Bedeutung hat, ist auch ein Latentwärmekörper bei welchem das Trägermaterial 5 als zusammenhängende Struktur ausgebildet ist.

Gegenstand der Erfindung, der allein oder in Kombination mit einem der vorbeschriebenen Gegenstände auch Bedeutung hat, ist auch ein Latentwärmekörper 1,17,20,30,39,49,50, welcher eine Anzahl Latentwärmeteilkörper 19,24 enthält, wobei ein Latentwärmeteilkörper 19,24 einen Trägermaterialteilkörper 21 und das in den darin enthaltenen kapillaren Aafnahmeräumen 6 vorhandene Latentwärmespeichermaterial 7,7',7'',54,55 und ein Restluftvolumen 11 enthält.

Gegenstand der Erfindung, der allein oder in Kombination mit einem der vorbeschriebenen Gegenstände auch Bedeutung hat, ist auch ein Latentwärmekörper 1,17,20,30,39,49,50, welcher plattenartig ausgebildet ist.

Gegenstand der Erfindung, der allein oder in Kombination mit einem der vorbeschriebenen Gegenstände auch Bedeutung hat, ist auch eine Warmhalteplatte, bei welcher die Aufnahme 28 eine in eine Oberfläche 31 des Plattengrundkörpers 27,38 integrierte Ausnehmung aufweist.

Gegenstand der Erfindung, der allein oder in Kombination mit einem der vorbeschriebenen Gegenstände auch Bedeutung hat, ist auch eine Fußbodenheizung bei welcher der Latentwärmekörper 1,17,20,30,39,49,50 plattenartig ausgebildet ist und zwischen der Rohdecke 14 und dem Heizregister 16 angeordnet ist.

Gegenstand der Erfindung, der allein oder in Kombination mit einem der vorbeschriebenen Gegenstände auch Bedeutung hat, ist auch eine Fußbodenheizung bei welcher auf der Oberseite der Rohdecke 14 eine Wärmeisolationsschicht angeordnet ist.

Gegenstand der Erfindung, der allein oder in Kombination mit einem der vorbeschriebenen Gegenstände auch Bedeutung hat, ist auch eine Fußbodenheizung bei welcher zwischen der Rohdecke und dem Heizregister 16 eine erste Lage 18 mit einem aus Latentwärmeteilkörpern 19 gebildeten Latentwärmekörper 20 angeordnet ist.

Gegenstand der Erfindung, der allein oder in Kombination mit einem der vorbeschriebenen Gegenstände auch Bedeutung hat, ist auch eine Fußbodenheizung bei welcher zwischen dem Heizregister 16 und der Abdeckung 15 eine zweite Lage 23 mit einem aus Latentwärmeteilkörpern 24 gebildeten Latentwärmekörper 25 angeordnet ist.

Gegenstand der Erfindung, der allein oder in Kombination mit einem der vorbeschriebenen Gegenstände auch Bedeutung hat, ist auch eine Fußbodenheizung bei welcher die Latentwärmeteilkörper 19,24 der ersten 18 und/oder der zweiten 23 Lage granulatartig ausgebildet sind.

Gegenstand der Erfindung, der allein oder in Kombination mit einem der vorbeschriebenen Gegenstände auch Bedeutung hat, ist auch eine Fußbodenheizung bei welcher in den Latentwärmeteilkörpern 19 der ersten Lage 18 ein Latentwärmespeichermaterial 7' mit einer gegenüber dem in den Latentwärmeteilkörpern 24 der zweiten Lage 23 enthaltenen Latentwärmspeichermaterial 7'' anderen Phasenumwandlungstemperatur enthalten ist.

Gegenstand der Erfindung, der allein oder in Kombination mit einem der vorbeschriebenen Gegenstände auch Bedeutung hat, ist auch eine Fußbodenheizung bei welcher die Phasenumwandlungstemperatur des Latentwärspeichermaterials 7' der ersten Lage 18 höher ist als die Phasenumwandlungstemperatur des Latentwärmespeichermaterials 7'' der zweiten Lage 23.

Gegenstand der Erfindung, der allein oder in Kombination mit einem der vorbeschriebenen Gegenstände auch Bedeutung hat, ist auch eine Foßodenheizung bei welcher die Phasenumwandlungstemperatur des Latentwärmespeichermaterials 7' der ersten Lage 18 52°C und daß die Phasenumwandlungstemperatur des Latentwärmespeichermaterials 7'' der zweiten Lage 23 42°C beträgt.

Gegenstand der Erfindung, der allein oder in Kombination mit einem der vorbeschriebenen Gegenstände auch Bedeutung hat, ist auch ein Transportbehälter 45, bei welchem in dem Zwischenraum plattenartige Latentwärmekörper 49,50 nach einem oder mehreren der Ansprüche 1 bis 15 oder insbesondere danach aufgenommen sind, wobei in der zu der Plattenebene der plattenartigen Latent wärmekörper 49,50 senkrechten Richtung benachbart zumindest zwei Latentwärmekörper 49,50 mit verschiedenen Phasenumwandlungstemperaturen des darin jeweils aufgenommenen Latentwärmespeichermaterials 54,55 angeordnet sind.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem dem Mineralstoff Faserelemente 12 zugegeben werden.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem die Faserelemente in dem Mineralstoff gleichmäßig verteilt werden.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem als Mineralstoff ein Gipswerkstoff und/oder ein Tonwerkstoff und/oder Kalksandstein und/oder Kieselerde verwendet wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem das vorher verflüssigte Latentwärmespeichermaterial 7,7',7'',54,55 drucklos an die selbst ansaugenden, kapillarartigen Aufnahmeräume 6 des Trägermaterials 5 herangeführt wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem das Trägermaterial 5 in das vorher verflüssigte Latentwärmespeichermaterial 7,7',7'',54,55 eingetaucht wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem die Temperatur des Latentwärmespeichermaterials 7,7',7'',54,55 während des Heranführens an die selbstansaugenden kapillarartigen Aufnahmeräume 6 des Trägermaterials 5 durch gezielte Wärmezu- und/oder -abfuhr gesteuert wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem dem Latentwärmespeichermaterial 7,7',7'', 54,55 ein Verdickungsmittel und/oder ein Anteil aus Mineralölen und Polymeren zugegeben wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem eine Masse des Latentwärmespeichermaterials 7,7',7'',54,55 an die Aufnahmeräume 6 des Trägermaterials 5 herangeführt wird, die zwischen 5 und 50%, vorzugsweise 25% oder weiter vorzugsweise 40 bis 50% der Gesamtmasse des Latentwärmekörpers 1,17,20,30,39,49,50 beträgt.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem das Trägermaterial nach dem Eintauchen in das vorher verflüssigte Latentwärmespeichermaterial abgetropft und/oder gekühlt wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem der Latentwärmekörper 1,17,20,30,39,49,50 mit einer Umhüllung 40 versehen wird.

Gegenstand der Erfindung, der allein oder in Kombination mit einem der vorbeschriebenen Gegenstände auch Bedeutung hat, ist auch ein Latentwärmekörper 1,17,20,30,39,49,50, bei welchem das Trägermaterial 5 mit dem darin in den kapillaren Aufnahmeräumen 6 aufgenommenen Latentwärmespeichermaterial 7,7',7'',54,55 von einer Einbettungsmasse umgeben ist.

Gegenstand der Erfindung, der allein oder in Kombination mit einem der vorbeschriebenen Gegenstände auch Bedeutung hat, ist auch ein Latentwärmekörper mit einem Trägermaterial und darin in kapillaren Aufnahmeräumen aufgenommenem Latentwärmespeichermaterial etwa auf Paraffinbasis, bei welchem die Anzahl der Latentwärmeteilkörper 59 gemeinsam von einer Einbettungsmasse 60,66 umgeben ist und daß das Trägermaterial Holzfasern und/oder Pappe und/oder Kieselerdegranulat und/oder Diatomeenerde enthält.

Gegenstand der Erfindung, der allein oder in Kombination mit einem der vorbeschriebenen Gegenstände auch Bedeutung hat, ist auch ein Latentwärmekörper, bei welchem in den kapillaren Aufnahmeräumen 62 ein temperaturabhängige Volumenänderungen des Latentwärmespeichermaterials 63 von maximal 10% des Latentwärmespeichermaterialvolumens aufnehmendes Restluftvolumen 64 vorhanden ist.

Gegenstand der Erfindung, der allein oder in Kombination mit einem der vorbeschriebenen Gegenstände auch Bedeutung hat, ist auch ein Latentwärmekörper, bei welchem das Trägermaterial Faserelemente, vorzugsweise in gleichmäßiger Verteilung, enthält.

Gegenstand der Erfindung, der allein oder in Kombination mit einem der vorbeschriebenen Gegenstände auch Bedeutung hat, ist auch ein Latentwarmekorper, bei welchem das Latentwärmespeichermaterial 63 ein Verdikkungsmittel und/oder einen Anteil an Mineralölen und Polymeren enthält.

Gegenstand der Erfindung, der allein oder in Kombination mit einem der vorbeschriebenen Gegenstände auch Bedeutung hat, ist auch ein Latentwärmekörper, bei welchem die Einbettungsmasse 60,66 Silikon, insbesondere Silikon-Kautschuk, und/oder Harz und/oder Beton enthält.

Gegenstand der Erfindung, der allein oder in Kombination mit einem der vorbeschriebenen Gegenstände auch Bedeutung hat, ist auch ein Latentwärmekörper, bei welchem der Anteil der Einbettungsmasse 60,66 an der Summe der Einzelmassen von Trägermaterial, Latentwärmespeichermaterial 63 und Einbettungsmasse 60,66 mindestens etwa 50% beträgt.

Gegenstand der Erfindung, der allein oder in Kombination mit einem der vorbeschriebenen Gegenstände auch Bedeutung hat, ist auch ein Latentwärmekörper, bei welchem der Anteil des Latentwärmespeichermaterials 63, bezogen auf die gemeinsame Masse von Latentwärmespeichermaterial 63 und Trägermaterial, zwischen etwa 40 und etwa 80% liegt, vorzugsweise etwa 60% beträgt.

Gegenstand der Erfindung, der allein oder in Kombination mit einem der vorbeschriebenen Gegenstände auch Bedeutung hat, ist auch ein Latentwärmekörper, bei welchem ein Trägermaterialteilkörper 61 bzw. ein Latentwärmeteilkörper 59 insgesamt eine granulatartige oder faserartige Gestalt aufweist und daß eine typische geometrische Abmessung eines Trägermaterialteilkörpers 61 bzw. eines Latentwärmeteilkörpers 59 in der Größenordnung weniger Millimeter bis weniger Zentimeter liegt.

Gegenstand der Erfindung, der allein oder in Kombination mit einem der vorbeschriebenen Gegenstände auch Bedeutung hat, ist auch ein Latentwärmekörper 65, welcher eine Anzahl Konglomerate 67 enthält, die jeweils aus einer Anzahl von Trägermaterialteilkörpern 61, in welchen Latentwärmespeichermaterial 63 aufgenommen ist und die gemeinsam von einer Einbettungsmasse 60,66 umgeben sind, gebildet sind, und dadurch, daß die Konglomerate 67 gemeinsam in eine Einlagerungsmasse 68 eingelagert sind.

Gegenstand der Erfindung, der allein oder in Kombination mit einem der vorbeschriebenen Gegenstände auch Bedeutung hat, ist auch ein Latentwärmekörper, bei welchem der Anteil der Einlagerungsmasse 68 an der Gesamtmasse des Latentwärmekörpers 65 mindestens etwa 50% beträgt.

Gegenstand der Erfindung, der allein oder in Kombination mit einem der vorbeschriebenen Gegenstände auch Bedeutung hat, ist auch ein Latentwärmekörper, bei welchem die Einlagerungsmasse 68 Silikon, insbesondere Silikon-Kautschuk, und/oder Harz und/oder Beton enthält.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem das mit Latentwärmespeichermaterial 63 getränkte Trägermaterial mit einer Einbettungsmasse 60,66 umgeben wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem das mit Latentwärmespeichermaterial 63 getränkte Trägermaterial zu Latentwärmeteilkörpern 59 zerkleinert wird, wobei ein Latentwärmeteilkörper 59 einen Trägermaterialteilkörper 61 und darin aufgenommenes Latentwärmemmichermaterial 63 enthält.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem eine Anzahl Latentwärmeteilkörper 59 gemeinsam mit einer Einbettungsmasse 60,66 umgeben werden.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem der Latentwärmekörper 58,65,69 vor einer Verfestigung der Einbettungsmasse 60,66 ausgewalzt und/oder in eine Form gegossen wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem aus einer Anzahl von Trägermaterialteilkörpern 59 mit darin aufgenommenem Latentwärmespeichermaterial 63 durch das gemeinsame Umgeben bzw. Einbetten in die Einbettungsmasse 60,66 ein Konglomerat 67 gebildet wird und daß eine Anzahl von Konglomeraten 67 gemeinsam in einer Einlagerungsmasse 68 eingelagert wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem das mit Latentwärmespeichermaterial 63 getränkte Trägermaterial, bevor es mit der Einbettungsmasse umgeben wird, in Latentwärmeteilkörper 59 zerkleinert wird, wobei ein Latentwärmeteilkörper 59 aus einem Trägermaterialteilkörper 61 und darin aufgenommenem Latentwärmespeichermaterial 63 und insbesondere einem Restluftvolumen 64 gebildet wird, und daß eine Mehrzahl von Latentwärmeteilkörpern 59 gemeinsam unter Ausbildung eines Zusammenhalts mit der Einbettungsmasse 60,66 umgeben wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem die Einbettungsmasse 60,66, während das mit Latentwärmespeichermaterial 63 getränkte Trägermaterial mit ihr umgeben wird, in einem fließfähigen und/oder knetfähigen Zustand verarbeitet wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem die Einbettungsmasse 60,66 nach dem Umgeben des mit Latentwärmespeichermaterial 63 getränkten Trägermaterials verfestigt, insbesondere getrocknet, wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem der Latentwärmekörper 58,65,69 vor einer Verfestigung der Einbettungsmasse 60,66 ausgewalzt und/oder in eine Form gegossen wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem aus einer Anzahl von Trägermaterialteilkörpern 59 mit darin aufgenommenem Latentwärmespeichermaterial 63 durch das gemeinsame Umgeben bzw. Einbetten in die Einbettungsmasse 60,66 ein Konglomerat 67 gebildet wird und daß eine Anzahl von Konglomeraten 67 gemeinsam in einer Einlagerungsmasse 68 eingelagert wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem als Einbettungsmasse 60,66 Beton und/oder Silikon, insbesondere Silikon-Kautschuk, und/oder Harz und/oder Beton verwendet wird.

Gegenstand der Erfindung, der allein oder in Kombination mit einem der vorbeschriebenen Gegenstände auch Bedeutung hat, ist auch ein Verfahren zur Herstellung eines Latentwärmekörpers, bei welchem als Einlagerungsmasse 68 Beton und/oder Silikon, insbesondere SilikonKautschuk, und/oder Harz und/oder Beton verwendet wird.

## Patentansprüche

1. Latentwärmekörper (1,17,20,30,39,49,50) mit in einem Aufnahmeräume aufweisenden Trägermaterial (5) aufgenommenen Latentwärmespeichermaterial (7,7',7'',54,55) etwa auf Paraffinbasis, **dadurch gekennzeichnet, daß** innerhalb des Trägermaterials (5) kapillare Aufnahmeräume (6) für das Latentwärmespeichermaterial (7,7',7'',54,55) ausgebildet sind und daß das Trägermaterial (5) einen Mineralstoff mit einer offenen kapillaren Porenstruktur (8) enthält.

2. Latentwärmekörper (1,17,20,30,39,49,50) nach Anspruch 1, **dadurch gekennzeichnet, daß** als Mineralstoff ein Gipswerkstoff und/oder ein Tonwerkstoff und/oder Kalksandstein und/oder Kieselerde enthalten ist.

3. Latentwärmekörper (1,17,20,30,39,49,50) nach einem der vorhergehenden Ansprüche , **dadurch gekennzeichnet, daß** das Trägermaterial (5) Faserelemente (12) enthält.

4. Latentwärmekörper (1,17,20,30,39,49,50) nach einem der vorhergehenden Ansprüche, **dadurch gekennzeichnet, daß** die Faserelemente (12) in dem Trägermaterial verteilt angeordnet sind.

5. Latentwärmekörper (1,17,20,30,39,49,50) nach einem der vorhergehenden Ansprüche, **dadurch gekennzeichnet, daß** der Massenanteil des Latentwärmespeichermaterials (7,7',7'',54, 55), bezogen auf die Gesamtmasse des Latentwärmekörpers (1,17,20,30,39,49,50), 5 bis 50%, vorzugsweise 25% oder weiter vorzugsweise 40 bis 50% beträgt.

6. Latentwärmekörper nach einem der vorhergehenden Ansprüche, **dadurch gekennzeichnet, daß** in den kapillaren Aufnahmeräumen (6) ein temperaturabhängige Volumenänderungen des Latentwärmespeichermaterials (7,7',7'',54,55) von maximal 10% des Latentwärmespeichermaterialvolumen aufnehmendes Restluftvolumen (11) vorhanden ist.

7. Latentwärmekörper nach einem der vorhergehenden Ansprüche, **dadurch gekennzeichnet, daß** das Restluftvolumen (11) gleichmäßig über die kapillaren Aufnahmeräume (6) verteilt ist.

8. Latentwärmekörper (1,17,20,30,39,49,50) nach einem der vorhergehenden Ansprüche, **dadurch gekennzeichnet, daß** das Latentwärmespeichermaterial (7,7',7'',54,55) ein Verdickungsmittel enthält.

9. Latentwärmekörper (1,17,20,30,39,49,50) nach einem der vorhergehenden Ansprüche , **dadurch gekennzeichnet, daß** das Latentwärmespeichermaterial (7,7',7'',54,55) einen Anteil an Mineralölen und Polymeren enthält.

10. Latentwärmekörper nach einem der vorhergehenden Ansprüche, **dadurch gekennzeichnet, daß** der Latentwärmekörper (1,17,20,30, 39,49,50) eine Umhüllung (40) aufweist.

11. Latentwärmekörper nach Ansprüch 10, **dadurch gekennzeichnet, daß** die Dtahüllung (40) aus einem Folienmaterial besteht.

12. Latentwärmekörper nach Ansprüch 10 oder 11, **dadurch gekennzeichnet, daß** die Umhüllung (40) für Latentwärmespeichermaterial (7,7',7'',54,55) undurchlässig ist.

13. Latentwärmekörper nach einem der vorhergehenden Ansprüche, **dadurch gekennzeichnet, daß** das Trägermaterial (5) als zusammenhängende Struktur ausgebildet ist.

14. Latentwärmekörper (1,17,20,30,39,49,50) nach einem der vorhergehenden Ansprüche, **dadurch gekennzeichnet, daß** der Latentwärmekörper (1,17,20,30,39,49,50) eine Anzahl Latentwärmeteilkörper (19,24) enthält, wobei ein Latentwärmeteilkörper (19,24) einen Trägermaterialteilkörper (21) und das in den darin enthaltenen kapillaren Aufnahmeräumen (6) vorhandene Latentwärmespeichermaterial (7,7',7'',54,55) und ein Restluftvolumen (11) enthält.

15. Latentwärmekörper (1,17,20,30,39,49,50) nach einem der vorhergehenden Ansprüche, **dadurch gekennzeichnet, daß** der Latentwärmekörper (1,17,20,30,39,49,50) plattenartig ausgebildet ist.

16. Warmhalteplatte (26,37) mit einem Plattengrundkörper (27,38) und mit einer daran ausgebildeten Aufnahme (28) für Nahrungsmittel (25), insbesondere für Reis, **dadurch gekennzeichnet, daß** der Plattengrundkörper (27,38) einen Latentwärmekörper (30,39) nach einem der Ansprüche 1 bis 15 enthält.

17. Warmhalteplatte nach Anspruch 16, **dadurch gekennzeichnet, daß** die Aufnahme (28) eine in eine Oberfläche (31) des Plattengrundkörpers (27,38) integrierte Ausnehmung aufweist.

18. Fußbodenheizung (13), insbesondere Elektrofußbodenheizung, mit einem zwischen einer Rohdecke (14) und einer Abdeckung (15) angeordneten Heizregister (16), **gekennzeichnet durch** einen Latentwärmekörper (1,17,20, 30,39,49,50) nach einem der Ansprüche 1 bis 15.

19. Fußbodenheizung nach Anspruch 18, **dadurch gekennzeichnet, daß** der Latentwärmerkörper (1,17,20,30.39, 49,50) plattenartig ausgebildet ist und zwischen der Rohdecke (14) und dem Heizregister (16) angeordnet ist.

20. Fußbodenheizung nach einem der Ansprüche 18 und 19, **dadurch gekennzeichnet, daß** auf der Oberseite der Rohdecke (14) eine Wärmeisolationsschicht angeordnet ist.

21. Fußbodenheizung (13) nach einem der Ansprüche 18 bis 20, **dadurch gekennzeichnet, daß** zwischen der Rohdekke und dem Heizregister (16) eine erste Lage (18) mit einem aus Latentwärmeteilkörpern (19) gebildeten Latentwärmekörper (20) nach einem *der* Ansprüche 1 bis 15 angeordnet ist.

22. Fußbodenheizung (13) nach einem der Ansprüche 18 bis 21, **dadurch gekennzeichnet, daß** zwischen dem Heizregister (16) und der Abdeckung (15) eine zweite Lage (23) mit einem aus Latentwärmeteilkörpern (24) gebildeten Latentwärmekörper (25) nach einem der Ansprüche 1 bis 15 angeordnet ist.

23. Fußbodenheizung (13) nach einem der Ansprüche 21 oder 22, **dadurch gekennzeichnet, daß** die Latentwärmeteilkörper (19,24) der ersten (18) und/oder der zweiten (23) Lage granulatartig ausgebildet sind.

24. Fußbodenheizung (13) nach einem der Ansprüche 22 oder 23, **dadurch gekennzeichnet, daß** in den Latentwärmeteilkörpern (19) der ersten Lage (18) ein Latentwärmespeichermaterial (7') mit einer gegenüber dem in den Latentwärmeteilkörpern (24) der zweiten Lage (23) enthaltenen Latentwärmespeichermaterial (7'') anderen Phasenumwandlungstemperatur enthalten ist.

25. Fußbodenheizung (13) nach einem der Ansprüche 22 bis 24, **dadurch gekennzeichnet, daß** die Phasenumwandlungstemperatur des Latentwärmespeichermaterials (7') der ersten Lage (18) höher ist als die Phasemmwandlungstemperatur des Latentwärmespeichermaterials (7'') der zweiten Lage (23).

26. Fußbodenheizung (13) nach einem der Ansprüche 22 bis 25, **dadurch gekennzeichnet, daß** die Phasenumwandlungstemperatur des Latentwärmespeichermaterials (7') der ersten Lage (18) 52°C und daß die Phasenumwandlungstemperatur des Latentwärmespeichermaterials (7'') der zweiten Lage (23) 42°C beträgt.

27. Transportbehälter (45) mit einem Außengehäuse (46) und einem darin mit einem Zwischenraum beabstandet aufgenommenen Innengehäuse (47), **dadurch gekennzeichnet, daß** in dem Zwischenraum ein Latentwärmekörper (49,50) nach einem der Ansprüche 1 bis 15 angeordnet ist.

28. Transportbehälter (45) nach Anspruch 27, **dadurch gekennzeichnet, daß** in dem Zwischenraum plattenartige Latentwärmekörper (49,50) nach einem der Ansprüche 1 bis 15 aufgenommen sind, wobei in der zu der Plattenebene der plattenartigen Latentwärmekörper (49,50) senkrechten Richtung benachbart zumindest zwei Latentwärmekörper (49,50) mit verschiedenen Phasenumwandlungstemperaturen des darin jeweils aufgenommenen Latentwärmespeichermaterials (54,55) angeordnet sind.

29. Verfahren zur Herstellung eines Latentwärmekörpers (1,17,20,30,39,49,50) mit in einem kapillare Aufnahmeräume (6) aufweisenden Trägermaterial (5) aufgenommenen Latentwärmespeichermaterial (7,7',7'',54,55) etwa auf Paraffinbasis, **dadurch gekennzeichnet, daß** das Latentwärmespeichermaterial (7,7',7'',54,55) verflüssigt wird, daß das vorher verflüssigte Latentwärmespeichermaterial (7,7',7'',54,55) an selbstansaugende, kapillarartige Aufnahmeräume (6) des Trägermaterials (5) herangeführt wird und daß ein Trägermaterial (5) verwendet wird, das einen Mineralstoff mit einer offenen, kapillaren Porenstruktur (8) enthält.

30. Verfahren nach Anspruch 29, **dadurch gekennzeichnet, daß** dem Mineralstoff Faserelemente (12) zugegeben werden.

31. Verfahren nach einem der Ansprüche 29 oder 30, **dadurch gekennzeichnet, daß** die Faserelemente in dem Mineralstoff gleichmäßig verteilt werden.

32. Verfahren nach einem der Ansprüche 29 bis 31, **dadurch gekennzeichnet, daß** als Mineralstoff ein Gipswerkstoff und/oder ein Tonwerkstoff und/oder Kalksandstein und/oder Kieselerde verwendet wird.

33. Verfahren nach einem der Ansprüche 29 bis 33, **dadurch gekennzeichnet, daß** das vorher verflüssigte Latentwärmespeichermaterial (7,7',7'',54,55) drucklos an die selbst ansaugenden, kapillarartigen Aufnahmeräume (6) des Trägermaterials (5) herangeführt wird.

34. Verfahren nach einem der Ansprüche 29 bis 33, **dadurch gekennzeichnet, daß** das Trägermaterial (5) in das vorher verflüssigte Latentwärmespeichermaterial (7,7',7'',54,55) eingetaucht wird.

35. Verfahren nach einem der Ansprüche 29 bis 34, **dadurch gekennzeichnet, daß** die Temperatur des Latentwärmespeichermaterials (7,7',7'',54,55) während des Heranführens an die selbstansaugenden kapillarartigen Aufnahmeräume (6) des Trägermaterials (5) durch gezielte Wärmezu- und/oder -abfuhr gesteuert wird.

36. Verfahren nach einem der Ansprüche 29 bis 35, **dadurch gekennzeichnet, daß** dem Latentwärmespeichermaterial (7,7',7'', 54,55) ein Verdickungsmittel und/oder ein Anteil aus Mineralölen und Polymeren zugegeben wird.

37. Verfahren nach einem der Ansprüche 29 bis 36, **dadurch gekennzeichnet, daß** eine Masse des Latentwärmespeichermaterials (7,7',7'',54,55) an die Aufnahmeräume (6) des Trägermaterials (5) herangeführt wird, die zwischen 5 und 50%, vorzugsweise 25 bis 50 % oder weiter vorzugsweise 40 bis 50% der Gesamtmasse des Latentwärmekörpers (1,17,20,30,39,49,50) beträgt.

38. Verfahren nach einem der Ansprüche 29 bis 37, **dadurch gekennzeichnet, daß** das Trägermaterial nach dem Eintauchen in das vorher verflüssigte Latentwärmespeichermaterial abgetropft und/oder gekühlt wird.

39. Verfahren nach einem der Ansprüche 29 bis 38, **dadurch gekennzeichnet, daß** der Latentwärmekörper (1,17,20,30,39,49,50) mit einer Umhüllung (40) versehen wird.

40. Latentwärmekörper (1,17,20,30,39,49,50) nach einem der Ansprüche 1 bis 15, **dadurch gekennzeichnet, daß** das Trägermaterial (5) mit dem darin in den kapillaren Aufnahmeräumen (6) aufgenommenen Latentwärmespeichermaterial (7,7',7'',54,55) von einer Einbettungsmasse umgeben ist.

41. Latentwärmekörper mit einem Trägermaterial und darin in kapillaren Aufnahmeräumen aufgenommenem Latentwärmespeichermaterial etwa auf Paraffinbasis, wobei der Latentwärmekörper (58,65,69) eine Anzahl von Latentwärmeteilkörpern (59) enthält und ein Latentwärmeteilkörper (59) einen Trägermaterialteilkörper (61) und darin in kapillaren Aufnahmeräumen (62) aufgenommenes Latentwärmespeichermaterial (63) enthält, **dadurch gekennzeichnet, daß** die Anzahl der Latentwärmeteilkörper (59) gemeinsam von einer Einbettungsmasse (60,66) umgeben ist und daß das Trägermaterial Holzfasern und/oder Pappe und/oder Kieselerdegranulat und/oder Diatomeenerde enthält.

42. Latentwärmekörper nach einem der Ansprüche 40 oder 41, **dadurch gekennzeichnet, daß** in den kapillaren Aufnahmeräumen (62) ein temperaturabhängige Volumenänderungen des Latentwärmespeichermaterials (63) von maximal 10% des Latentwärmespeichermaterialvolumens aufnehmendes Restluftvolumen (64) vorhanden ist.

43. Latentwärmekörper nach einem der Ansprüche 40 bis 42, **dadurch gekennzeichnet, daß** das Trägermaterial Faserelemente, vorzugsweise in gleichmäßiger Verteilung, enthält.

44. Latentwärmekörper nach einem der Ansprüche 40 bis 43, **dadurch gekennzeichnet, daß** das Latentwärmespeichermaterial (63) ein Verdickungsmittel und/oder einen Anteil an Mineralölen und Polymeren enthält.

45. Latentwärmekörper nach einem der Ansprüche 41 bis 44, **dadurch gekennzeichnet, daß** die Einbettungsmasse (60,66) Silikon, insbesondere Silikon-Kautschuk, und/oder Harz und/oder Beton enthält.

46. Latentwärmekörper nach einem der Ansprüche 41 bis 45, **dadurch gekennzeichnet, daß** der Anteil der Einbettungsmasse (60,66) an der Summe der Einzelmassen von Trägermaterial, Latentwärmespeichermaterial (63) und Einbettungsmasse (60,66) mindestens etwa 50% beträgt.

47. Latentwärmekörper nach einem der Ansprüche 1 bis 15 oder 40 bis 46, **dadurch gekennzeichnet, daß** der Anteil des Latentwärmespeichermaterials (63), bezogen auf die gemeinsame Masse von Latentwärmespeichermaterial (63) und Trägermaterial, zwischen etwa 40 und etwa 80% liegt, vorzugsweise etwa 60% beträgt.

48. Latentwärmekörper nach einem der Ansprüche 1 bis 15 oder 40 bis 47, **dadurch gekennzeichnet, daß** ein Trägermaterialteilkörper (61) bzw. ein Latentwärmeteilkörper (59) insgesamt eine granulatartige oder faserartige Gestalt aufweist und daß eine typische geometrische Abmessung eines Trägerrnafcerialteilkörpers (61) bzw. eines Latentwärmeteilkörpers (59) in der Größenordnung weniger Millimeter bis weniger Zentimeter liegt.

49. Latentwärmekörper nach einem der Ansprüche 1 bis 15 oder 40 bis 48, **dadurch gekennzeichnet daß** der Latentwärmekörper (65) eine Anzahl Konglomerate (67) enthält, die jeweils aus einer Anzahl von Trägermaterialteilkörpern (61), in welchen Latentwärmespeichermaterial (63) aufgenommen ist und die gemeinsam von einer Einbettungsmasse (60,66) umgeben sind, gebildet sind, und dadurch, daß die Konglomerate (67) gemeinsam in eine Einlagerungsmasse (68) eingelagert sind.

50. Latentwärmekörper nach einem der Ansprüche 1 bis 15 oder 40 bis 49, **dadurch gekennzeichnet, daß** der Anteil der Einlagerungsmasse (68) an der Gesamtmasse des Latentwärmekörpers (65) mindestens etwa 50% beträgt.

51. Latentwärmekörper nach Anspruch 50, **dadurch gekennzeichnet, daß** die Einlagerungsmasse (68) Silikon, insbesondere Silikon-Kautschuk, und/oder Harz und/oder Beton enthält.

52. Verfahren nach einem der Ansprüche 29 bis 39, **dadurch gekennzeichnet, daß** das mit Latentwärmespeichermaterial (63) getränkte Trägermaterial mit einer Einbettungsmasse (60,66) umgeben wird.

53. Verfahren nach einem der Ansprüche 29 bis 39 oder nach Anspruch 52, **dadurch gekennzeichnet, daß** das mit Latentwärmespeichermaterial (63) getränkte Trägermaterial zu Latentwärmeteilkörpern (59) zerkleinert wird, wobei ein Latentwärmeteilkörper (59) einen Trägermaterialteilkörper (61) und darin aufgenommenes Latentwärmespeichermaterial (63) enthält.

54. Verfahren nach Anspruch 53, **dadurch gekennzeichnet, daß** eine Anzahl Latentwärmeteilkörper (59) gemeinsam mit einer Einbettungsmasse (60,66) umgeben werden.

55. Verfahren nach einem der Ansprüche 29 bis 39 oder einem der Ansprüche 53,54, **dadurch gekennzeichnet, daß** der Latentwärmekörper (58,65,69) vor einer Verfestigung der Einbettungsmasse (60,66) ausgewalzt und/oder in eine Form gegossen wird.

56. Verfahren nach einem der Ansprüche 29 bis 39 oder 53 bis 55, **dadurch gekennzeichnet, daß** aus einer Anzahl von Trägermaterialteilkörpern (59) mit darin aufgenommenem Latentwärmespeichermaterial (63) durch das gemeinsame Umgeben bzw. Einbetten in die Einbettungsmasse (60,66) ein Konglomerat (67) gebildet wird und daß eine Anzahl von Konglomeraten (67) gemeinsam in einer Einlagerungsmasse (68) eingelagert wird.

57. Verfahren zur Herstellung eines Latentwärmekörpers mit in einem kapillare Aufnahmeräume aufweisenden Trägermaterial aufgenommenen Latentwärmespeichermaterial etwa auf Paraffinbasis, wobei das Latentwärmespeichermaterial verflüssigt wird und das vorher verflüssigte Latentwärmespeichermaterial an selbstansaugende, kapillarartige Aufnahmeräume des Trägermaterials herangeführt wird, **dadurch gekennzeichnet, daß** das mit Latentwärmespeichermaterial (63) getränkte Trägermaterial mit einer Einbettungsmasse (60,66) umgeben wird und daß ein Trägermaterial verwendet wird, das Holzfasern und/oder Pappe und/oder Kieselerdegranulat und/oder Diatomeenerde enthält.

58. Verfahren nach Anspruch 57, **dadurch gekennzeichnet, daß** das mit Latentwärmespeichermaterial (63) getränkte Trägermaterial, bevor es mit der Einbettungsmasse umgeben wird, in Latentwärmeteilkörper (59) zerkleinert wird, wobei ein Latentwärmteilkörper (59) aus einem Trägermaterialteilkörper (61) und darin aufgenommenem Latentwärmespeichermaterial (63) und insbesondere einem Restluftvolumen (64) gebildet wird, und daß eine Mehrzahl von Latentwärmeteilkörpern (59) gemeinsam unter Ausbildung eines Zusammenhalts mit der Einbettungsmasse (60,66) umgeben wird.

59. Verfahren nach einem der Ansprüche 57 oder 58, **dadurch gekennzeichnet, daß** die Einbettungsmasse (60,66), während das mit Latentwärmespeichermaterial (63) getränkte Trägermaterial mit ihr umgeben wird, in einem fließfähigen und/oder knetfähigen Zustand verarbeitet wird.

60. Verfahren nach einem der Ansprüche 57 bis 59, **dadurch gekennzeichnet, daß** die Einbettungsmasse (60,66) nach dem Umgeben des mit Latentwärmespeichermaterial (63) getränkten Trägermaterials verfestigt, insbesondere getrocknet, wird.

61. Verfahren nach einem der Ansprüche 57 bis 60, **dadurch gekennzeichnet, daß** der Latentwärmekörper (58,65,69) vor einer Verfestigung der Einbettungsmasse (60,66) ausgewalzt und/oder in eine Form gegossen wird.

62. Verfahren nach einem der Ansprüche 57 bis 61, **dadurch gekennzeichnet, daß** aus einer Anzahl von Trägermaterialteilkörpern (59) mit darin aufgenommenem Latentwärmespeichermaterial (63) durch das gemeinsame Umgeben bzw. Einbetten in die Einbettungsmasse (60,66) ein Konglomerat (67) gebildet wird und daß eine Anzahl von Konglomeraten (67) gemeinsam in einer Einlagerungsmasse (68) eingelagert wird.

63. Verfahren nach einem derAnsprüche 57 bis 62, **dadurch gekennzeichnet, daß** als Einbettungsmasse (60,66) Beton und/oder Silikon, insbesondere Silikon-Kautschuk, und/oder Harz und/oder Beton verwendet wird.

64. Verfahren nach einem der Ansprüche 62 oder 63, **dadurch gekennzeichnet, daß** als Einlagerungsmasse (68) Beton und/oder Silikon, insbesondere Silikon-Kautschuk, und/oder Harz und/oder Beton verwendet wird.

## Claims

1. Latent heat body (1, 17, 20, 30, 39, 49, 50) having latent heat storage material (7, 7', 7", 54, 55) which is based, for example, on paraffin and which is held in a carrier material (5) which has holding spaces, **characterized in that** capillary holding spaces (6) for the latent heat storage material (7, 7', 7", 54, 55) are formed inside the carrier material (5), and **in that** the carrier material (5) contains a mineral substance with an open capillary pore structure (8).

2. Latent heat body (1, 17, 20, 30, 39, 49, 50) according to Claim 1, **characterized in that** a gypsum material and/or a clay material and/or calcereous sandstone and/or siliceous earth is contained as mineral substance.

3. Latent heat body (1, 17, 20, 30, 39, 49, 50) according to one of the preceding claims, **characterized in that** the carrier material (5) contains fibre elements (12).

4. Latent heat body (1, 17, 20, 30, 39, 49, 50) according to one of the preceding claims, **characterized in that** the fibre elements (12) are disposed in a distributed manner in the carrier material.

5. Latent heat body (1, 17, 20, 30, 39, 49, 50) according to one of the preceding claims, **characterized in that** the proportion by mass of the latent heat storage material (7, 7', 7", 54, 55), based on the total mass of the latent heat body (1, 17, 20, 30, 39, 49, 50), is from 5 to 50%, preferably 25% or further preferably 40 to 50%.

6. Latent heat body according to one of the preceding claims, **characterized in that** a residual air volume (11), which absorbs temperature-dependent changes in volume of the latent heat storage material (7, 7', 7", 54, 55) of at most 10% of the latent heat storage material volume, is present in the capillary holding spaces (6).

7. Latent heat body according to one of the preceding claims, **characterized in that** the residual air volume (11) is uniformly distributed over the capillary holding spaces (6).

8. Latent heat body (1, 17, 20, 30, 39, 49, 50) according to one of the preceding claims, **characterized in that** the latent heat storage material (7, 7', 7", 54, 55) contains a thickening agent.

9. Latent heat body (1, 17, 20, 30, 39, 49, 50) according to one of the preceding claims, **characterized in that** the latent heat storage material (7, 7', 7", 54, 55) contains a proportion of mineral oils and polymers.

10. Latent heat body according to one of the preceding claims, **characterized in that** the latent heat body (1, 17, 20, 30, 39, 49, 50) has a sheath (40).

11. Latent heat body according to Claim 10,
**characterized in that** the sheath (40) consists of a film/foil material.

12. Latent heat body according to Claim 10 or 11, **characterized in that** the sheath (40) is impermeable to latent heat storage material (7, 7', 7", 54, 55).

13. Latent heat body according to one of the preceding claims, **characterized in that** the carrier material (5) is formed as a cohesive structure.

14. Latent heat body (1, 17, 20, 30, 39, 49, 50) according to one of the preceding claims, **characterized in that** the latent heat body (1, 17, 20, 30, 39, 49, 50) contains a number of latent heat part-bodies (19, 24), a latent heat part-body (19, 24) containing a carrier material part-body (21) and the latent heat storage material (7, 7', 7", 54, 55) which is present in the capillary holding spaces (6) contained therein and a residual air volume (11).

15. Latent heat body (1, 17, 20, 30, 39, 49, 50) according to one of the preceding claims, **characterized in that** the latent heat body (1, 17, 20, 30, 39, 49, 50) is of plate-like form.

16. Warming plate (26, 37) having a plate base body (27, 38) and having a receptacle (28) for foodstuffs (25), in particular for rice, which is formed thereon, **characterized in that** the plate base body (27, 38) contains a latent heat body (30, 39) according to one of Claims 1 to 15.

17. Warming plate according to Claim 16, **characterized in that** the receptacle (28) has a recess which is integrated into a surface (31) of the plate base body (27, 38).

18. Floor heating (13), in particular electric floor heating, having a heating register (16) disposed between a bare floor (14) and a covering (15), **characterized by** a latent heat body (1, 17, 20, 30, 39, 49, 50) according to one of Claims 1 to 15.

19. Floor heating according to Claim 18, **characterized in that** the latent heat body (1, 17, 20, 30, 39, 49, 50) is formed in the manner of a slab and is disposed between the bare floor (14) and the heating register (16).

20. Floor heating according to one of Claims 18 and 19, **characterized in that** a thermally insulating layer is disposed on the top side of the bare floor (14).

21. Floor heating (13) according to one of Claims 18 to 20, **characterized in that** a first layer (18) with a latent heat body (20), which is formed from latent heat part-bodies (19), according to one of Claims 1 to 15 is disposed between the bare floor and the heating register (16).

22. Floor heating (13) according to one of Claims 18 to 21, **characterized in that** a second layer (23) with a latent heat body (25), which is formed from latent heat part-bodies (24), according to one of Claims 1 to 15 is disposed between the heating register (16) and the covering (15).

23. Floor heating (13) according to one of Claims 21 or 22, **characterized in that** the latent heat part-bodies (19, 24) of the first (18) and/or second (23) layer are formed in the manner of granules.

24. Floor heating (13) according to one of Claims 22 or 23, **characterized in that** a latent heat storage material (7') with a phase transition temperature which is different compared with the latent heat storage material (7") contained in the latent heat part-bodies (24) of the second layer (23) is contained in the latent heat part-bodies (19) of the first layer (18).

25. Floor heating (13) according to one of Claims 22 to 24, **characterized in that** the phase transition temperature of the latent heat storage material (7') of the first layer (18) is higher than the phase transition temperature of the latent heat storage material (7") of the second layer (23).

26. Floor heating (13) according to one of Claims 22 to 25, **characterized in that** the phase transition temperature of the latent heat storage material (7') of the first layer (18) is 52°C, and **in that** the phase transition temperature of the latent heat storage material (7") of the second layer (23) is 42°C.

27. Transport container (45) having an outer housing (46) and an inner housing (47) which is held therein spaced apart by a space, **characterized in that** a latent heat body (49, 50) according to one of Claims 1 to 15 is disposed in the space.

28. Transport container (45) according to Claim 27, **characterized in that** plate-like latent heat bodies (49, 50) according to one of Claims 1 to 15 are held in the space, at least two latent heat bodies (49, 50) with different phase transition temperatures of the latent heat storage material (54, 55) respectively held therein being disposed adjacently in the direction perpendicular to the plate plane of the plate-like latent heat bodies (49, 50).

29. Method for producing a latent heat body (1, 17, 20, 30, 39, 49, 50) with latent heat storage material (7, 7', 7", 54, 55) which is based, for example, on paraffin and which is held in a carrier material (5) which has capillary holding spaces (6), **characterized in that** the latent heat storage material (7, 7', 7", 54, 55) is liquefied, **in that** the previously liquefied latent heat storage material (7, 7', 7", 54, 55) is conducted to automatically sucking, capillary-like holding spaces (6) of the carrier material (5), and **in that** a carrier material (5) which contains a mineral substance with an open, capillary pore structure (8) is used.

30. Method according to Claim 29, **characterized in that** fibre elements (12) are added to the mineral substance.

31. Method according to one of Claims 29 or 30, **characterized in that** the fibre elements are uniformly distributed in the mineral substance.

32. Method according to one of Claims 29 to 31, **characterized in that** a gypsum material and/or a clay material and/or calcereous limestone and/or siliceous earth is used as mineral substance.

33. Method according to one of Claims 29 to 32, **characterized in that** the previously liquefied latent heat storage material (7, 7', 7", 54, 55) is conducted at zero pressure to the automatically sucking, capillary-like holding spaces (6) of the carrier material (5).

34. Method according to one of Claims 29 to 33, **characterized in that** the carrier material (5) is immersed in the previously liquefied latent heat storage material (7, 7', 7", 54, 55).

35. Method according to one of Claims 29 to 34, **characterized in that** the temperature of the latent heat storage material (7, 7', 7", 54, 55), while it is being conducted to the automatically sucking, capillary-like holding spaces (6) of the carrier material (5), is controlled by the targeted supply and/or dissipation of heat.

36. Method according to one of Claims 29 to 35, **characterized in that** a thickening agent and/or a proportion of mineral oils and polymers is added to the latent heat storage material (7, 7', 7", 54, 55).

37. Method according to one of Claims 29 to 36, **characterized in that** a mass of the latent heat storage material (7, 7', 7", 54, 55) is conducted to the holding spaces (6) of the carrier material (5), which mass is between 5 and 50%, preferably 25% to 50% or further preferably 40 to 50%, of the total mass of the latent heat body (1, 17, 20, 30, 39, 49, 50).

38. Method according to one of Claims 29 to 37, **characterized in that** the carrier material, after it has been immersed in the previously liquefied latent heat storage material, is drip-dried and/or cooled.

39. Method according to one of Claims 29 to 38, **characterized in that** the latent heat body (1, 17, 20, 30, 39, 49, 50) is provided with a sheath (40).

40. Latent heat body (1, 17, 20, 30, 39, 49, 50) according to one of Claims 1 to 15, **characterized in that** the carrier material (5) together with the latent heat storage material (7, 7', 7", 54, 55) held therein in the capillary holding spaces (6) is surrounded by an embedding material.

41. Latent heat body having a carrier material and latent heat storage material which is based, for example, on paraffin and held therein in capillary holding spaces, the latent heat body (58, 65, 69) containing a number of latent heat part-bodies (59) and a latent heat part-body (59) containing a carrier material part-body (61) and latent heat storage material (63) which is held therein in capillary holding spaces (62), **characterized in that** the number of latent heat part-bodies (59) together is surrounded by an embedding material (60, 66), and **in that** the carrier material contains wood fibres and/or cardboard and/or granulated siliceous earth and/or diatomaceous earth.

42. Latent heat body according to one of Claims 40 or 41, **characterized in that** a residual air volume (64), which absorbs temperature-dependent changes in volume of the latent heat storage material (63) of at most 10% of the latent heat storage material volume, is present in the capillary holding spaces (62).

43. Latent heat body according to one of Claims 40 to 42, **characterized in that** the carrier material contains fibre elements, preferably in a uniform distribution.

44. Latent heat body according to one of Claims 40 : to 43, **characterized in that** the latent heat storage material (63) contains a thickening agent and/or a proportion of mineral oils and polymers.

45. Latent heat body according to one of Claims 41 to 44, **characterized in that** the embedding material (60, 66) contains silicone, in particular silicone rubber, and/or resin and/or concrete.

46. Latent heat body according to one of Claims 41 to 45, **characterized in that** the proportion of the embedding material (60, 66) in the sum of the individual masses of carrier material, latent heat storage material (63) and embedding material (60, 66) amounts to at least approximately 50%.

47. Latent heat body according to one of Claims 1 to 15 or 40 to 46, **characterized in that** the proportion of the latent heat storage material (63), based on the common mass of latent heat storage material (63) and carrier material, lies between approximately 40 and approximately 80%, and is preferably approximately 60%.

48. Latent heat body according to one of Claims 1 to 15 or 40 to 47, **characterized in that** a carrier material part-body (61) or a latent heat part-body (59) is overall of granular or fibrous structure, and **in that** a typical geometric dimension of a carrier material part-body (61) or of a latent heat part-body (59) is of the order of magnitude of a few millimetres to a few centimetres.

49. Latent heat body according to one of Claims 1 to 15 or 40 to 48, **characterized in that** the latent heat body (65) contains a number of conglomerates (67), which are each formed from a number of carrier material part-bodies (61), in which latent heat storage material (63) is held and which together are surrounded by an embedding material (60, 66), and **in that** the conglomerates (67) together are incorporated in a matrix material (68).

50. Latent heat body according to one of Claims 1 to 15 or 40 to 49, **characterized in that** the proportion of the matrix material (68) in the total mass of the latent heat body (65) is at least approximately 50%.

51. Latent heat body according to Claim 50, **characterized in that** the matrix material (68) contains silicone, in particular silicone rubber, and/or resin and/or concrete.

52. Method according to one of Claims 29 to 39, **characterized in that** the carrier material which is impregnated with latent heat storage material (63) is surrounded by an embedding material (60, 66).

53. Method according to one of Claims 29 to 39 or according to Claim 52, **characterized in that** the carrier material, which is impregnated with latent heat storage material (63), is comminuted to form latent heat part-bodies (59), a latent heat part-body (59) containing a carrier material part-body (61) and latent heat storage material (63) held therein.

54. Method according to Claim 53, **characterized in that** a number of latent heat part-bodies (59) together are surrounded by an embedding material (60, 66).

55. Method according to one of Claims 29 to 39 or one of Claims 53, 54, **characterized in that** the latent heat body (58, 65, 69), before solidification of the embedding material (60, 66), is rolled out and/or cast into a mould.

56. Method according to one of Claims 29 to 39 or 53 to 55, **characterized in that** a conglomerate (67) is formed from a number of carrier material part-bodies (59) with latent heat storage material (63) held therein as a result of the common surrounding or embedding in the embedding material (60, 66), and **in that** a number of conglomerates (67) together is incorporated in a matrix material (68).

57. Method for producing a latent heat body with latent heat storage material which is based, for example, on paraffin and held in a carrier material which has capillary holding spaces, the latent heat storage material being liquefied and the previously liquefied latent heat storage material being conducted to automatically sucking, capillary-like holding spaces of the carrier material, **characterized in that** the carrier material which has been impregnated with latent heat storage material (63) is surrounded by an embedding material (60, 66), and **in that** a carrier material which contains wood fibres and/or cardboard and/or granulated siliceous earth and/or diatomaceous earth is used.

58. Method according to Claim 57, **characterized in that** the carrier material, which has been impregnated with latent heat storage material (63), before it is surrounded with the embedding material, is comminuted into latent heat part-bodies (59), a latent heat part-body (59) being formed from a carrier material part-body (61) and latent heat storage material (63) which is held therein and in particular a residual air volume (64), and **in that** a plurality of latent heat part-bodies (59) together is surrounded, so as to form a cohesive unit with the embedding material (60, 66).

59. Method according to one of Claims 57 or 58, **characterized in that** the embedding material (60, 66), while the carrier material which has been impregnated with latent heat storage material (63) is being surrounded therewith, is processed in a free-flowing and/or kneadable state.

60. Method according to one of Claims 57 to 59, **characterized in that** the embedding material (60, 66), after surrounding of the carrier material impregnated with latent heat storage material (63), is solidified, in particular dried.

61. Method according to one of Claims 57 to 60, **characterized in that** the latent heat body (58, 65, 69), before solidification of the embedding material (60, 66), is rolled out and/or cast into a mould.

62. Method according to one of Claims 57 to 61, **characterized in that** a conglomerate (67) is formed from a number of carrier material part-bodies (59) with latent heat storage material (63) held therein by the common surrounding or embedding in the embedding material (60, 66), and **in that** a number of conglomerates (67) together is incorporated in a matrix material (68).

63. Method according to one of Claims 57 to 62, **characterized in that** concrete and/or silicone, in particular silicone rubber, and/or resin and/or concrete is used as embedding material (60, 66).

64. Method according to one of Claims 62 or 63, **characterized in that** concrete and/or silicone, in particular silicone rubber and/or resin and/or concrete is used as matrix material (68).

## Revendications

1. Corps à chaleur latente (1, 17, 20, 30, 39, 49, 50) avec, dans un matériau support (5) présentant des cavités, un matériau logé emmagasinant la chaleur latente (7, 7', 7", 54, 55), par exemple à base de paraffine, **caractérisé en ce que**, à l'intérieur du matériau support (5), sont formées des cavités capillaires (6) pour le matériau emmagasinant la chaleur latente (7, 7', 7", 54, 55) et **en ce que** le matériau support (5) contient une substance minérale ayant une structure de pores capillaire à porosité ouverte (8).

2. Corps à chaleur latente (1, 17, 20, 30, 39, 49, 50) selon la revendication 1, **caractérisé en ce qu'**il contient comme substance minérale, un matériau gypseux et/ou un matériau argileux et/ou du grès calcaire et/ou de la silice.

3. Corps à chaleur latente (1, 17, 20, 30, 39, 49, 50) selon l'une des revendications précédentes, **caractérisé en ce que** le matériau support (5) contient des éléments fibreux (12).

4. Corps à chaleur latente (1, 17, 20, 30, 39, 49, 50) selon l'une des revendications précédentes, **caractérisé en ce que** les éléments fibreux (12) sont répartis dans le matériau support.

5. Corps à chaleur latente (1, 17, 20, 30, 39, 49, 50) selon l'une des revendications précédentes, **caractérisé en ce que** la teneur massique en matériau emmagasinant la chaleur latente (7, 7', 7", 54, 55), rapportée à la masse totale du corps à chaleur latente (1, 17, 20, 30, 39, 49, 50) est de 5 et 50%, de préférence de 25% ou plus préférentiellement encore de 40 à 50%.

6. Corps à chaleur latente (1, 17, 20, 30, 39, 49, 50) selon l'une des revendications précédentes, **caractérisé en ce que**, dans les cavités capillaires (6), est prévu un espace d'air résiduel (11) absorbant des variations de volume dépendantes de la température du matériau emmagasinant la chaleur latente (7, 7', 7", 54, 55) d'au maximum 10% du volume de matériau emmagasinant la chaleur latente (7, 7', 7",54,55).

7. Corps à chaleur latente selon l'une des revendications précédentes, **caractérisé en ce que**, l'espace d'air résiduel (11) est réparti de façon uniforme dans les cavités capillaires (6).

8. Corps à chaleur latente (1, 17, 20, 30, 39, 49, 50) selon l'une des revendications précédentes, **caractérisé en ce que** le matériau emmagasinant la chaleur latente (7, 7', 7", 54, 55) contient un agent épaississant.

9. Corps à chaleur latente (1, 17, 20, 30, 39, 49, 50) selon l'une des revendications précédentes, **caractérisé en ce que** le matériau emmagasinant la chaleur latente (7, 7', 7", 54, 55) contient une proportion d'huiles minérales et de polymères.

10. Corps à chaleur latente selon l'une des revendications précédentes, **caractérisé en ce que** le corps à chaleur latente (1, 17, 20, 30, 39, 49, 50) présente une enveloppe (40).

11. Corps à chaleur latente selon la revendication 10, **caractérisé en ce que** l'enveloppe (40) consiste en un matériau en forme de feuille.

12. Corps à chaleur latente selon la revendication 10 ou 11, **caractérisé en ce que** l'enveloppe (40) est imperméable au matériau emmagasinant la chaleur latente (7, 7', 7", 54, 55).

13. Corps à chaleur latente selon l'une des revendications précédentes, **caractérisé en ce que** le matériau support (5) est construit sous forme de structure continue.

14. Corps à chaleur latente (1, 17, 20, 30, 39, 49, 50) selon l'une des revendications précédentes, **caractérisé en ce que** le corps à chaleur latente (1, 17, 20, 30, 39, 49, 50) contient une pluralité de parties de corps à chaleur latente (19, 24), une partie de corps à chaleur latente (19, 24) contenant une partie de matériau support (21), le matériau emmagasinant la chaleur latente (7, 7', 7", 54, 55) présent dans les cavités capillaires (6) du matériau support (21) et un espace d'air résiduel (11).

15. Corps à chaleur latente (1, 17, 20, 30, 39, 49, 50) selon l'une des revendications précédentes, **caractérisé en ce que** le corps à chaleur latente (1, 17, 20, 30, 39, 49, 50) est construit en forme de plaque.

16. Chauffe-plats (26, 37) avec un corps de base de la plaque (27, 38) munis d'un logement (28) pour un aliment (25), en particulier pour du riz, **caractérisé en ce que** le corps de base de la plaque (27, 38) contient un corps à chaleur latente (30, 39) selon l'une des revendications 1 à 15.

17. Chauffe-plats selon la revendication 16, **caractérisé en ce que** le logement (28) présente un creux intégré dans la surface (31) du corps de base de la plaque (27, 38).

18. Chauffage pour sol (13), en particulier chauffage électrique pour sol, avec un registre de tirage (16) disposé entre une couche de fond (14) et un revêtement (15), **caractérisé par** un corps à chaleur latente (1, 17, 20, 30, 39, 49, 50) selon l'une des revendications 1 à 15.

19. Chauffage pour sol selon la revendication 18, **caractérisé en ce que** le corps à chaleur latente (1, 17, 20, 30, 39, 49, 50) est construit en forme de plaque et est disposé entre la couche de fond (14) et le registre de tirage (16).

20. Chauffage pour sol selon la revendication 18 et 19, **caractérisé en ce qu'**une couche d'isolation thermique est disposée sur la face supérieure de la couche de fond (14).

21. Chauffage pour sol (13) selon l'une des revendications 18 à 20, **caractérisé en ce qu'**une première couche (18) comprenant un corps à chaleur latente (20) formé de parties de corps à chaleur latente (19) selon l'une des revendications 1 à 15 est disposée entre la couche de fond et le registre de tirage (16).

22. Chauffage pour sol (13) selon l'une des revendications 18 à 21, **caractérisé en ce qu'**une deuxième couche (23) comprenant un corps à chaleur latente (25) formé de parties de corps à chaleur latente (24) selon l'une des revendication 1 à 15, est disposée entre le registre de tirage (16) et le revêtement (15).

23. Chauffage pour sol (13) selon l'une des revendications 21 ou 22, **caractérisé en ce que** les parties de corps à chaleur latente (19, 24) de la première (18) et/ou de la deuxième (23) couche(s) sont sous forme de granulés.

24. Chauffage pour sol (13) selon l'une des revendications 22 ou 23, **caractérisé en ce que**, dans les parties de corps à chaleur latente (19) de la première couche (18) est contenu un matériau emmagasinant la chaleur (7') avec une température de transition de phase différente de celle du matériau emmagasinant la chaleur latente (7") contenu dans les parties de corps à chaleur latente (24) de la deuxième couche (23).

25. Chauffage pour sol (13) selon l'une des revendications 22 à 24, **caractérisé en ce que** la température de transition de phase du matériau emmagasinant la chaleur latente (7') de la première couche (18) est supérieure à la température de transition de phase du matériau emmagasinant la chaleur latente (7") de la seconde couche (23).

26. Chauffage pour sol (13) selon l'une des revendications 22 à 25, **caractérisé en ce que** la température de transition de phase du matériau emmagasinant la chaleur latente (7') de la première couche (18) est de 52°C et que la température de transition de phase du matériau emmagasinant la chaleur latente (7") de la seconde couche (18) est de 42°C.

27. Conteneur pour le transport (45) avec une boîtier externe (46) et un boîtier interne (47) contenu à l'intérieur et séparé par un espace, **caractérisé en ce que**, dans l'espace est disposé un corps à chaleur latente (49, 50) selon l'une des revendications 1 à 15.

28. Conteneur pour le transport (45) selon la revendication 27, **caractérisé en ce que** dans ledit espace sont contenus des corps à chaleur latente (49, 50) en forme de plaques selon l'une des revendications 1 à 15, au moins deux corps à chaleur latente (49, 50) contenant un matériau emmagasinant la chaleur (54, 55) avec des températures de changement de phases différentes étant disposés à proximité dans la direction perpendiculaire au plan de la plaque des corps à chaleur latente (49, 50) sous forme de plaques.

29. Procédé de fabrication d'un corps à chaleur latente (1, 17, 20, 30, 39, 49, 50) avec un matériau emmagasinant la chaleur latente (7, 7', 7", 54, 55), par exemple à base de paraffine, logé dans un matériau support (5) présentant des cavités capillaires (6), **caractérisé en ce que** le matériau emmagasinant la chaleur latente (7, 7', 7'', 54, 55) est liquéfié, **en ce que** le matériau emmagasinant la chaleur latente (7, 7', 7'', 54, 55) précédemment liquéfié est rapproché des cavités de forme capillaire (6) auto-aspirantes du matériau support (5) et **en ce qu'**on utilise un matériau support (5) qui contient une substance minérale avec un structure de pores capillaire à porosité ouverte (8).

30. Procédé selon la revendication 29, **caractérisé en ce que** des éléments fibreux (12) sont ajoutés à la substance minérale.

31. Procédé selon la revendication 29 ou 30, **caractérisé en ce que** les éléments fibreux sont répartis dans la substance minérale de façon uniforme.

32. Procédé selon l'une des revendications 29 à 31, **caractérisé en ce qu'**on utilise comme substance minérale un matériau gypseux et/ou un matériau argileux et/ou un grès calcaire et/ou une silice.

33. Procédé selon l'une des revendications 29 à 32, **caractérisé en ce que** le matériau emmagasinant la chaleur latente (7, 7', 7", 54, 55) précédemment liquéfié est rapproché en absence de pression des cavités de forme capillaire (6) auto-aspirantes du matériau support (5).

34. Procédé selon l'une des revendications 29 à 33, **caractérisé en ce que** le matériau support (5) est plongé dans le matériau emmagasinant la chaleur latente (7, 7', 7",54,55) précédemment liquéfié.

35. Procédé selon l'une des revendications 29 à 34, **caractérisé en ce que** la température du matériau emmagasinant la chaleur latente (7, 7', 7", 54, 55) est contrôlée par apport et/ou retrait de chaleur à cet effet, pendant le rapprochement du matériau support (5) des cavités capillaires (6) auto-aspirantes.

36. Procédé selon l'une des revendications 29 à 35, **caractérisé en ce qu'**on ajoute au matériau emmagasinant la chaleur latente (7, 7', 7", 54, 55) un agent épaississant et/ou une proportion d'huiles minérales ou de polymères.

37. Procédé selon l'une des revendications 29 à 36, **caractérisé en ce qu'**on rapproche une masse de matériau emmagasinant la chaleur latente (7, 7', 7", 54, 55) des cavités (6) du matériau support (5) comprise entre 5 et 50%, de préférence de 25 à 50% ou encore plus préférentiellement de 40 à 50% de la masse totale du corps à chaleur latente (1, 17, 20, 30, 39, 49, 50).

38. Procédé selon l'une des revendications 29 à 37, **caractérisé en ce que** le matériau support est égoutté et/ou refroidi après l'immersion dans le matériau emmagasinant la chaleur liquéfié.

39. Procédé selon l'une des revendications 29 à 38, **caractérisé en ce que** le matériau à chaleur latente (1, 17, 20, 30, 39, 49, 50) est pourvu d'une enveloppe (40).

40. Matériau à chaleur latente (1, 17, 20, 30, 39, 49, 50) selon l'une des revendications 1 à 15, **caractérisé en ce que** le matériau support (5) avec le matériau emmagasinant la chaleur latente (7, 7', 7", 54, 55) logé à l'intérieur des cavités capillaires (6), est entouré d'une masse d'enrobage.

41. Matériau à chaleur latente avec un matériau support et un matériau emmagasinant la chaleur latente, par exemple à base de paraffine, logé à l'intérieur des cavités capillaires, dans lequel le corps à chaleur latente (58, 65, 69) contient une pluralité de parties de corps à chaleur latente (59), une partie de corps à chaleur latente (59) contenant une partie de matériau support (61) logeant dans ses cavités capillaires (62) un matériau emmagasinant la chaleur latente (63), **caractérisé en ce que** la pluralité de parties de corps à chaleur latente (59) est entourée globalement d'une masse d'enrobage (60, 66) et **en ce que** le matériau support contient des fibres de bois et/ou de papier et/ou de granulé de silice et/ou de terre diatomée.

42. Matériau à chaleur latente selon l'une des revendications 40 et 41, **caractérisé en ce que** dans les cavités capillaires (62) est prévu un espace d'air résiduel(64) absorbant des variations de volume dépendantes de la température du matériau emmagasinant la chaleur latente (63) d'au maximum 10% du volume de matériau emmagasinant la chaleur latente.

43. Corps à chaleur latente selon l'une des revendications 40 à 42, **caractérisé en ce que** le matériau support contient des éléments fibreux, de préférence répartis de façon uniforme.

44. Corps à chaleur latente selon l'une des revendications 40 à 43, **caractérisé en ce que** le matériau emmagasinant la chaleur latente (63) contient un agent épaississant et/ou une proportion d'huiles minérales et de polymères.

45. Corps à chaleur latente selon l'une des revendications 41 à 44, **caractérisé en ce que** la masse d'enrobage (60, 66) contient de la silicone, en particulier du silicone caoutchouc et/ou une résine et/ou du béton.

46. Corps à chaleur latente selon l'une des revendications 41 à 45, **caractérisé en ce que** la proportion de masse d'enrobage (60, 66) est d'au moins environ 50% de la somme des masses individuelles du matériau support, du matériau emmagasinant la chaleur latente (63) et de la masse d'enrobage (60, 66).

47. Corps à chaleur latente selon l'une des revendications 1 à 15 ou 40 à 46, **caractérisé en ce que** la proportion du matériau emmagasinant la chaleur latente (63) rapportée à la masse totale du matériau emmagasinant la chaleur (63) et du matériau support, est comprise entre environ 40 et environ 80%, et est de préférence d'environ 60%.

48. Corps à chaleur latente selon l'une des revendications 1 à 15 ou 40 à 47, **caractérisé en ce qu'**une partie de matériau support (61), ou une partie de corps de matériau à chaleur latente (59), présente globalement une forme granuleuse ou de fibreuse, et **en ce qu'**une dimension géométrique typique d'une partie de matériau support (61) ou d'une partie de corps de matériau à chaleur latente (59), est de l'ordre de grandeur de quelques millimètres à quelques centimètres.

49. Corps à chaleur latente selon l'une des revendications 1 à 15 ou 40 à 48, **caractérisé en ce que** le corps à chaleur latente (65) contient une pluralité de conglomérats (67), qui sont chacun formés d'une pluralité de parties de matériau support (61) dans lesquelles le matériau emmagasinant la chaleur latente (63) est logé et qui sont entourées ensemble d'une masse d'enrobage (60, 66), et **en ce que** les conglomérats (67) sont incorporés ensemble dans une masse d'incorporation (68).

50. Corps à chaleur latente selon l'une des revendications 1 à 15 ou 40 à 49, **caractérisé en ce que** la proportion de masse d'incorporation (68) par rapport à la masse totale du corps à chaleur latente (65) est d'au moins environ 50%.

51. Corps à chaleur latente selon la revendication 50, **caractérisé en ce que** la masse d'incorporation (68) contient de la silicone, en particulier de la caoutchouc silicone et/ou une résine et/ou du béton.

52. Procédé selon l'une des revendications 29 à 39, **caractérisé en ce que** le matériau support imprégné de matériau emmagasinant la chaleur latente (63) est entouré d'une masse d'enrobage (60, 66).

53. Procédé selon l'une des revendications 29 à 39 ou selon la revendication 52, **caractérisé en ce que** le matériau support imprégné de matériau emmagasinant la chaleur (63) est réduit en parties de corps à chaleur latente (59), une partie de corps à chaleur latente (59) contenant une partie de matériau support (61) et logeant à l'intérieur le matériau emmagasinant la chaleur latente (63).

54. Procédé selon la revendication 53, **caractérisé en ce qu'**une pluralité de parties de corps à chaleur latente (59) sont entourées ensemble d'une masse d'enrobage (60, 66).

55. Procédé selon l'une des revendications 29 à 39 ou 53 ou 54, **caractérisé en ce que** le corps à chaleur latente (58, 65, 69) est laminé avant la solidification de la masse d'enrobage (60, 66) et/ou coulé en forme.

56. Procédé selon l'une des revendications 29 à 39 ou 53 à 55, **caractérisé en ce qu'**à partir d'une pluralité de parties de corps de matériau support (59) logeant à l'intérieur le matériau emmagasinant la chaleur latente (63), est formé par l'entourement global ou l'enrobage dans la masse d'enrobage (60, 66), un conglomérat (67) et **en ce qu'**une pluralité de conglomérats (67) est incorporée ensemble dans une masse d'incorporation (68).

57. Procédé de fabrication d'un corps à chaleur latente avec un matériau emmagasinant la chaleur latente, par exemple à base de paraffine logé dans un matériau support présentant des cavités capillaires, dans lequel le matériau emmagasinant la chaleur latente est liquéfié est le matériau emmagasinant la chaleur latente précédemment liquéfié est rapproché des cavités de forme capillaire, auto-aspirantes, du matériau support, **caractérisé en ce que** le matériau support imprégné de matériau emmagasinant la chaleur latente (63) est entouré avec une masse d'enrobage (60, 66) et **en ce qu'**un matériau support est utilisé, qui contient dés fibres de bois et/ou de carton et/ou des granulés de silice et/ou de terre diatomée.

58. Procédé selon la revendication 57, **caractérisé en ce que** le matériau support imprégné de matériau emmagasinant la chaleur latente (63), avant d'être entouré avec la masse d'enrobage, est broyé en parties de corps à chaleur latente (59), une partie de corps à chaleur latente (59) étant formée d'une partie de matériau support (61) et du matériau emmagasinant la chaleur latente (63) contenu à l'intérieur de ce dernier et en particulier d'un volume rempli d'air (64), et **en ce que** une pluralité de parties de corps à chaleur latente (59) sont entourés ensemble par formation d'un ensemble au moyen de la masse d'enrobage (60, 66).

59. Procédé selon l'une des revendications 57 ou 58, **caractérisé en ce que** la masse d'enrobage (60, 66), pendant que le matériau support imprégné de matériau emmagasinant la chaleur latente (63) est entouré avec elle, est travaillée à l'état fluide et/ou pétrissable.

60. Procédé selon l'une des revendications 57 à 59, **caractérisé en ce que** la masse d'enrobage (60, 66), après l'entourement du matériau support imprégné de matériau emmagasinant la chaleur latente (63), est solidifiée, en particulier séchée.

61. Procédé selon l'une des revendications 57 à 60, **caractérisé en ce que** le corps à chaleur latente (58, 65, 69) est laminé et/ou est coulé en forme avant la solidification de la masse d'enrobage (60, 66).

62. Procédé selon l'une des revendications 57 à 61, **caractérisé en ce qu'**un conglomérat (67) est formé à partir d'une pluralité de parties de matériau support (59) logeant à l'intérieur le matériau emmagasinant la chaleur latente (63) par entourement ou enrobage dans la masse d'enrobage (60, 66) et **en ce qu'**une pluralité de conglomérats (67) sont incorporés ensemble dans une masse d'incorporation (68).

63. Procédé selon l'une des revendications 57 à 62, **caractérisé en ce qu'**on utilise comme masse d'enrobage (60, 66) du béton et/ou de la silicone, en particulier de la caoutchouc silicone, et/ou une résine et/ou du béton.

64. Procédé selon l'une des revendications 62 ou 63, **caractérisé en ce qu'**on utilise en tant que masse d'incorporation (68) du béton et/ou de la silicone, en particulier de la caoutchouc silicone et/ou une résine et/ou du béton.
